(19) Europäisches Patentamt

European Patent Office

Office européen des brevets

(11) EP 2 615 285 A1

(12) EUROPEAN PATENT APPLICATION
published in accordance with Art. 153(4) EPC

(43) Date of publication:
17.07.2013 Bulletin 2013/29

(51) Int Cl.:
F02D 41/40 (2006.01)    F02B 31/02 (2006.01)

(21) Application number: 10845960.3

(22) Date of filing: 08.09.2010

(86) International application number:
PCT/JP2010/065443

(87) International publication number:
WO 2012/032627 (15.03.2012 Gazette 2012/11)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(71) Applicant: Toyota Jidosha Kabushiki Kaisha
Toyota-shi, Aichi 471-8571 (JP)

(72) Inventor: HASEGAWA, Ryo
Toyota-shi
Aichi 471-8571 (JP)

(74) Representative: TBK
Bavariaring 4-6
80336 München (DE)

(54) CONTROL DEVICE FOR INTERNAL COMBUSTION ENGINE

(57) While an "injection time representative crank angle", which is a timing for obtaining a "representative swirl velocity" according to an operation state of an engine is specified, a "spray representative position", which is a specified position in spray for obtaining a "representative swirl velocity" is specified. A "representative swirl velocity" at the specified "injection time representative crank angle" and in the specified "spray representative position", and an "actual representative swirl velocity", which is obtained by performing temperature correction on the "representative swirl velocity" are calculated. A "target representative swirl velocity" according to an operation state of the engine is calculated, and an opening degree of a swirl control valve is adjusted such that the "actual representative swirl velocity" matches the "target representative swirl velocity".

FIG.7

Swirl velocity control

Specify injection time representative crank angle — ST1

Specify spray representative position — ST2

Calculate representative swirl velocity — ST3

Correct representative swirl velocity and calculate actual representative swirl velocity — ST4

Target representative swirl velocity = Actual representative swirl velocity? — ST5

YES

NO

Determine swirl velocity control operation amount — ST6

Swirl control valve control — ST7

RETURN

EP 2 615 285 A1

**Description**

[Technical Field]

The present invention relates to a control apparatus of a compression self-ignition internal combustion engine represented by a diesel engine. Specifically, the present invention relates to a procedure for expanding the scope of usage of a swirl flow that occurs in a cylinder.

[Background Art]

As conventionally known, in diesel engines used as engines for automobiles or the like, various control parameters such as a fuel injection amount from a fuel injection valve (hereinafter also referred to as an "injector"), fuel injection timing and the like, are controlled according to the engine speed, the amount of accelerator operation, the coolant temperature, the intake air temperature and the like. The control values of these control parameters are obtained from the viewpoints of improving exhaust emissions, securing a high engine torque, reducing combustion noises, and the like.
Then, a swirl flow (swirling flow in the horizontal direction) that occurs in a cylinder can be given as one example of the control parameters. Specifically, it has been proposed to control the combustion state in a combustion chamber by adjusting the swirl flow (swirl flow velocity). More specifically, the swirl flow velocity (hereinafter also referred to as a "swirl velocity") is controlled by adjusting the opening degree of a swirl control valve provided in an intake system, thereby controlling the state of spray in the combustion chamber.
For example, Patent Literature 1 listed below discloses obtaining an optimal swirl ratio (the number of rotations of intake air in an inner circumferential direction of a cylinder during a single rotation period of a crankshaft) using an expression "constant × angle between nozzles of injector / main injection period", and experimentally deciding the constant such that the spaces between sprays injected from the nozzles can be utilized as much as possible.
Also, Patent Literature 2 listed below discloses a technique in which in the case where PM emissions exceed an upper acceptable limit with respect to the pilot injection time determined based on the operation state of an engine, the swirl flow is changed so that PM emissions are suppressed so as not to exceed the upper acceptable limit without changing the pilot injection time.

[Citation List]

[Patent Literature]

**[0006]**

　　[PTL 1] JP 2007-177783A
　　[PTL 2] JP 2004-360572A

[Disclosure of Invention]

[Technical Problems]

Recently, along with enforcement of stricter regulations on exhaust emissions from automobiles (Euro 6, for example), it has been requested that even in a state where a parameter that affects the combustion state, such as the pressure, temperature, gas (air) amount, oxygen concentration or the like in the cylinder (which is also referred to as a "quantity of combustion state"), changes due to an environmental change, a transition of operation, or the like, the amount of generated smoke, HC or the like are suppressed to be within the ranges required by regulations by adjusting the combustion state of an air-fuel mixture to an appropriate state (for example, by adjusting the equivalence ratio at the combustion field to an appropriate ratio).
More specifically, the spray angle of fuel injected from nozzles of an injector varies according to the quantity of combustion state. For example, the higher the pressure or the temperature in the cylinder is, the larger the spray angle is. Also, the larger the amount of gas or the oxygen concentration in the cylinder is, the higher the temperature in the cylinder is, and thus in such cases as well, the spray angle increases. As described above, if the swirl velocity is not adjusted appropriately when an environmental change, a transition of operation or the like that increases the spray angle has occurred, an overlap degree between sprays may become too large and the amount of smoke generated may exceed ranges required by regulations. In contrast, if the swirl velocity is not be adjusted appropriately in the case where an environmental change, a transition of operation or the like that reduces the spray angle has occurred, the overlap degree between sprays may become too small and the amount of generated HC may exceed the ranges required by regulations.

However, in the swirl flow control disclosed in the above-described patent literatures, no consideration is made in the swirl flow control to the fact that the quantity of combustion state changes due to an environmental change, a transition of operation or the like, and thus the scope of usage of the swirl flow is limited.

In view of this, the inventor of the present invention focused on expanding the scope of usage of the swirl flow, and has achieved the present invention.

The present invention has been achieved in view of the above-described issues, and an object thereof is to provide a control apparatus of an internal combustion engine that is capable of expanding the scope of usage of the swirl flow that occurs in a cylinder, thereby improving exhaust emissions.

[Means for Solving the Problems]

- Principles of Solution -

In a principle of the solution provided by the present invention for achieving the above object, the timing and the position (the position in the cylinder) for calculating or estimating a swirl flow velocity in a cylinder, in other words, the timing and the position (the position specified in the longitudinal direction of the spray) for calculating or estimating the velocity at which the spray of fuel injected into the cylinder is moved by the swirl flow in the circumferential direction are specified according to the operation state of an internal combustion engine, and the control parameters (the swirl velocity, fuel injection interval, and the like) of the internal combustion engine are controlled based on the specified swirl velocity.

- Solving Means -

Specifically, the present invention assumes the use of a control apparatus of a compression self-ignition internal combustion engine that injects fuel from a fuel injection valve into a cylinder in which a swirl flow is generated, and performs combustion by the fuel undergoing self-ignition. The control apparatus of an internal combustion engine includes representative timing specifying means that specifies a timing for calculating a swirl velocity according to an operation state of the internal combustion engine; representative position specifying means that specifies a position in a cylinder for calculating the swirl velocity according to an operation state of the internal combustion engine; swirl velocity calculating means that calculates a swirl velocity at the specified representative timing and in the specified representative position; and control parameter adjusting means that adjusts an internal combustion engine control parameter based on the swirl velocity calculated by the swirl velocity calculating means.

With this specific configuration, it is possible to adjust the swirl velocity to an appropriate velocity at a timing during a fuel injection period (representative timing) for which exhaust emissions and the like should be considered, and in a position in a cylinder (in-spray position: representative position), according to the operation state of the internal combustion engine. For example, in an operation state in which the amount of smoke generated should be considered, the swirl velocity at the timing and in the region (position in a cylinder) causing the smoke is adjusted to an appropriate value, and in an operation state in which the amount of HC generated should be considered, the swirl velocity at the timing and in the region (position in a cylinder) causing HC is adjusted to an appropriate value. In this manner, even in the case where a rapid change in the operation state of the internal combustion engine or an environmental change occurs, deterioration of exhaust emissions can be prevented, and favorable exhaust emissions can be maintained.

The swirl velocity and the injection interval may be used as the internal combustion engine control parameter. As a configuration for adjusting the swirl velocity, the configuration described below may be adopted. A variable swirl velocity mechanism capable of varying the swirl velocity is provided, and the control parameter adjusting means controls the variable swirl velocity mechanism such that the swirl velocity calculated by the swirl velocity calculating means matches a preset target swirl velocity.

In this case, a swirl control valve in an intake system or a variable valve timing mechanism for an intake valve may be used as the variable swirl velocity mechanism.

By adjusting the swirl velocity at the specified representative timing and in the specified representative position to an appropriate value, a spray flow state according to the operation state can be obtained, and even in the case where a rapid change in the operation state of the internal combustion engine or an environmental change occurs, exhaust emissions can be improved.

As a configuration for adjusting the injection interval, the configuration described below may be adopted. The control parameter adjusting means controls an injection interval of fuel that is injected in a plurality of stages at intervals such that an equivalence ratio in an overlap region between sprays of fuel injected from the fuel injection valve in a plurality of stages at intervals matches a preset target equivalence ratio.

In this manner, also by adjusting the injection interval to an appropriate interval based on the swirl velocity at the specified representative timing and in the specified representative position, a spray flow state according to the operation state can be obtained, and even in the case where a rapid change in the operation state of the internal combustion engine or an environmental change occurs, exhaust emissions can be improved.

As a specific configuration for the representative timing specifying means, the representative timing specifying means is configured to specify the timing for calculating the swirl velocity to be further toward an angle of delay side in a period of fuel injection from the fuel injection valve, the higher a load of the internal combustion engine is.

The reason for specifying the representative timing in this manner will now be described below. At the time of high-load operation of the internal combustion engine, the equivalence ratio in the combustion field is rich, and there is a possibility that the amount of smoke generated increases in a late period (angle of delay side) of the combustion period. Thus, an angle of delay side of the fuel injection period, which greatly affects this amount of smoke generated, is specified as a timing for calculating the swirl velocity, and the swirl velocity on the angle of delay side of the fuel injection period is adjusted to an appropriate value, thereby suppressing the amount of smoke generated to be within the ranges required by regulations. In contrast, at the time of low-load operation of the internal combustion engine, the equivalence ratio in the combustion field is lean, and there is a possibility that the ignitability of the air-fuel mixture deteriorates, or the amount of HC generated in an early period (angle of advance side) of the combustion period increases. Thus, an angle of advance side of the fuel injection period, which greatly affects this ignitability or the amount of HC generated, is specified as a timing for calculating the swirl velocity, and the swirl velocity in the angle of advance side of the injection period is adjusted to an appropriate value, thereby achieving a favorable ignitability of the air-fuel mixture and also suppressing the amount of HC generated to be within the ranges required by regulations.

As a specific configuration for the representative position specifying means, the representative position specifying means is configured to specify the position in a cylinder for calculating the swirl velocity to be further toward a central position in a longitudinal direction of a spray, the central position being separated from a tip in a length direction of the spray, the higher a load of the internal combustion engine is.

The reason for specifying the representative position in this manner will now be described below. At the time of high-load operation of the internal combustion engine, the central position in the spray longitudinal direction where the equivalence ratio tends to be rich and thereby causes an increase in the amount of smoke generated is specified as a position in a cylinder for calculating the swirl velocity, and the swirl velocity in the central position in the spray longitudinal direction is adjusted to an appropriate value, thereby suppressing the amount of smoke generated to be within the ranges required by regulations. In contrast, at the time of low-load operation of the internal combustion engine, there is a possibility that the amount of HC generated may increase due to attachment of fuel to a wall face. Thus, a spray tip position, which greatly affects the amount of HC generated, is specified as a position in cylinder for calculating the swirl velocity, and the swirl velocity at the spray tip position is adjusted to an appropriate value, thereby suppressing the amount of HC generated to be within the ranges required by regulations.

As a specific configuration for the swirl velocity calculating means, the swirl velocity calculating means is configured to calculate the swirl velocity by performing a correction operation according to a quantity of a state in a cylinder on a representative swirl velocity at the specified representative timing and in the specified representative position.

Also, in the method for calculating a target swirl velocity, the target swirl velocity is obtained by performing a correction operation according to a quantity of a state in a cylinder on a reference target swirl velocity obtained according to an operation state of the internal combustion engine.

Specifically, at least one of a temperature, a pressure, a gas amount, and an oxygen concentration in a cylinder may be used as the quantity of state in a cylinder.

Since the swirl velocity and the target swirl velocity are calculated by performing correction according to a quantity of a state in a cylinder as described above, even in the case where a rapid change in the operation state of the internal combustion engine or an environmental change occurs, an appropriate swirl velocity and an appropriate target swirl velocity can be calculated, so that deterioration of exhaust emissions can be prevented.

Also, the target equivalence ratio is obtained according to an operation state of the internal combustion engine.

[Effects of the Invention]

In the present invention, the timing and the position for calculating the swirl velocity in a cylinder are specified according to the operation state of the internal combustion engine, and the control parameters (swirl velocity, fuel injection interval, and the like) of the internal combustion engine are controlled based on the specified swirl velocity. Therefore, even in the case where a rapid change in the operation state of the internal combustion engine or an environmental change has occurred, an appropriate swirl velocity and an appropriate target swirl velocity can be calculated, so that deterioration of exhaust emissions can be prevented.

[Brief Description of Drawings]

[FIG. 1]

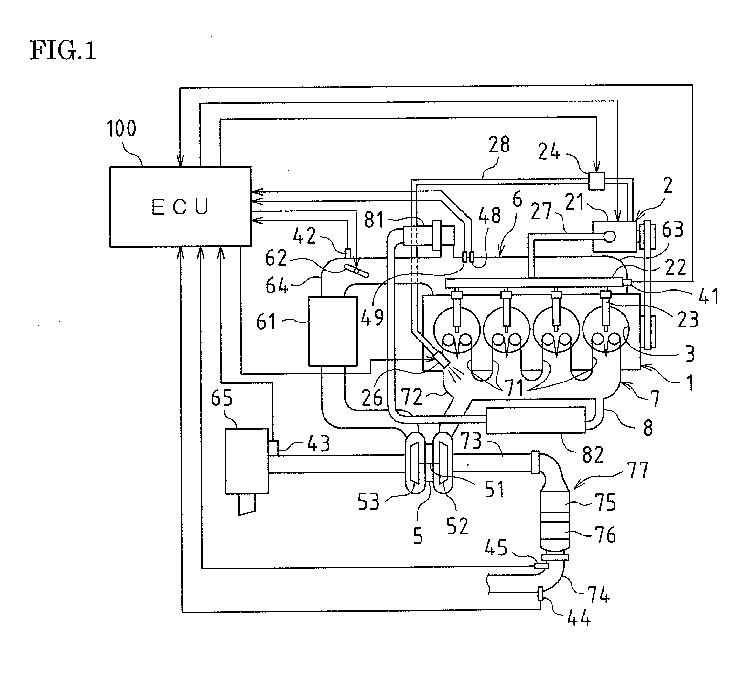

FIG. 1 shows a schematic configuration diagram of an engine and the control system thereof according to an embodiment.
[FIG. 2]

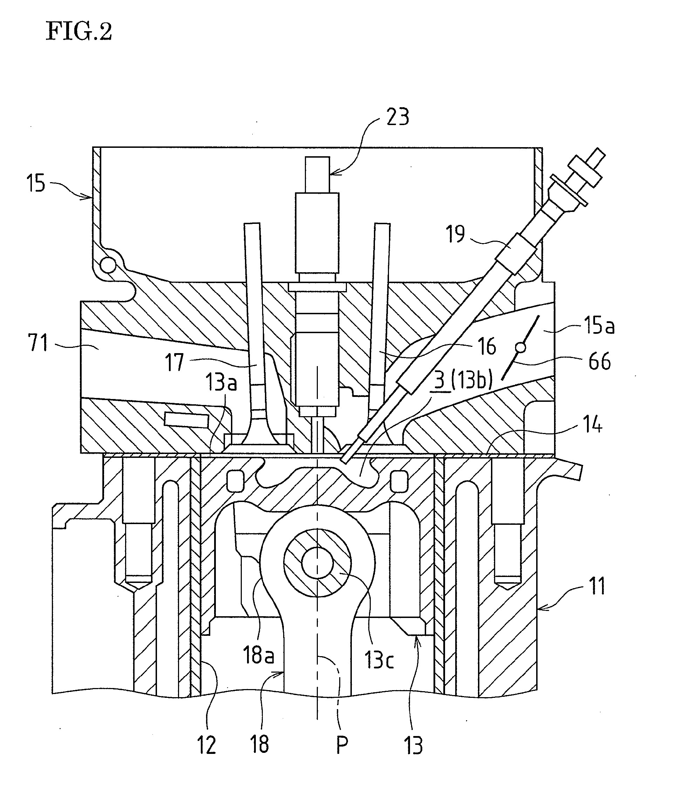

FIG. 2 is a cross-sectional view showing a combustion chamber of a diesel engine and parts in the vicinity of the combustion chamber.
[FIG. 3]

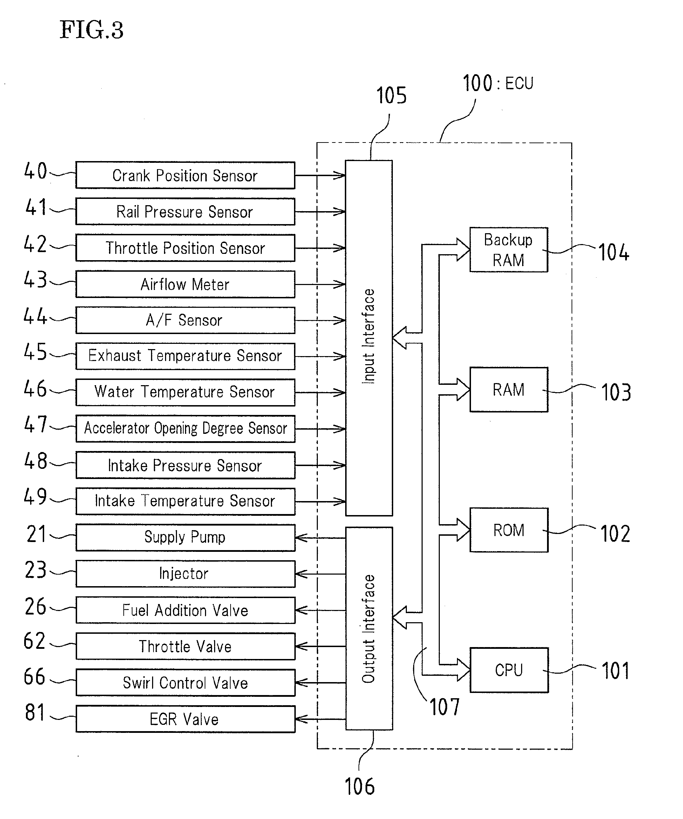

FIG. 3 is a block diagram showing the configuration of a control system such as an ECU.
[FIG. 4]

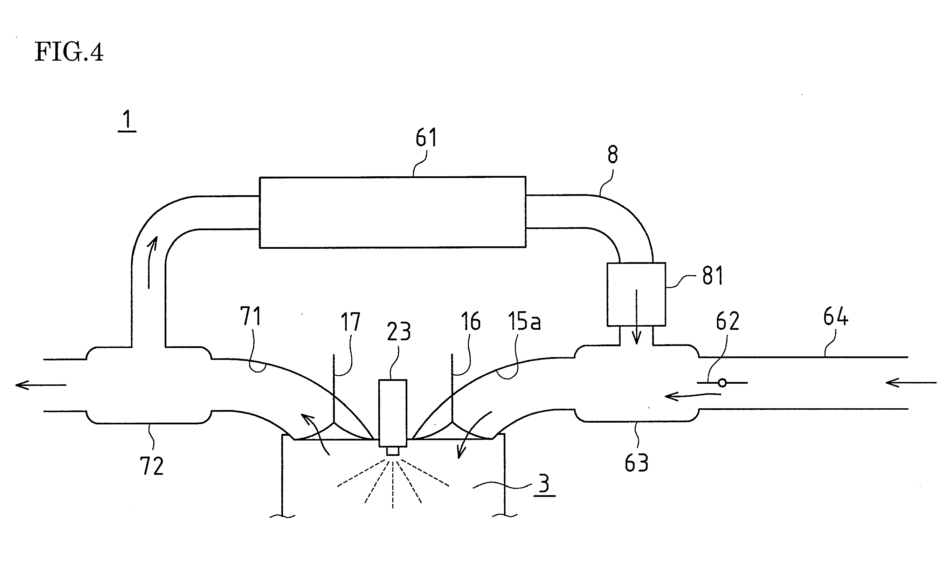

FIG. 4 is a schematic diagram of intake and exhaust systems and the combustion chamber for illustrating the outline of the combustion forms within the combustion chamber.
[FIG. 5]

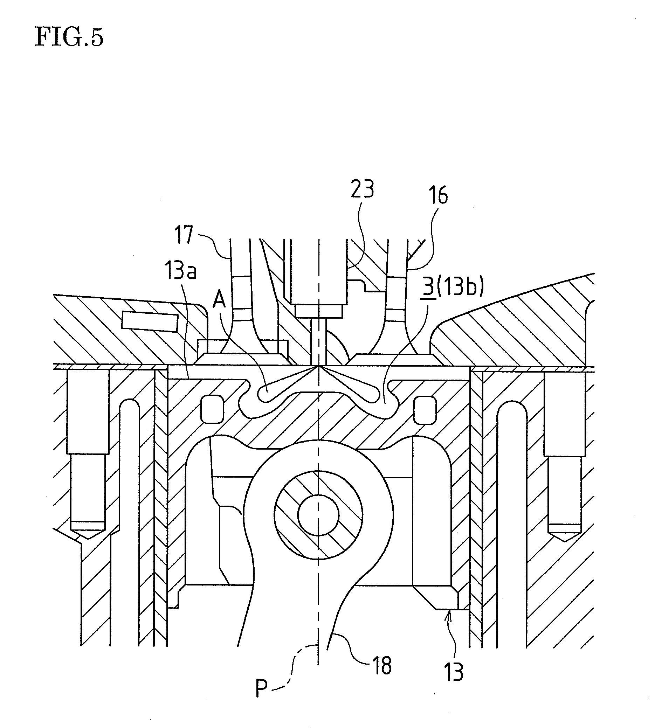

FIG. 5 is a cross-sectional view showing the combustion chamber and parts in the vicinity of the combustion chamber at the time of fuel injection.
[FIG. 6]

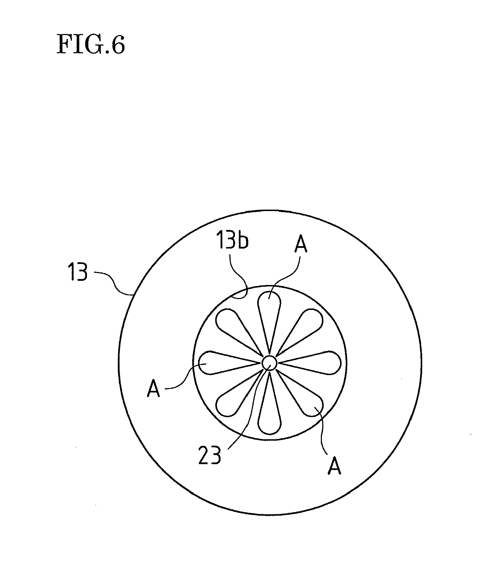

FIG. 6 is a plan view of the combustion chamber at the time of fuel injection.
[FIG. 7]

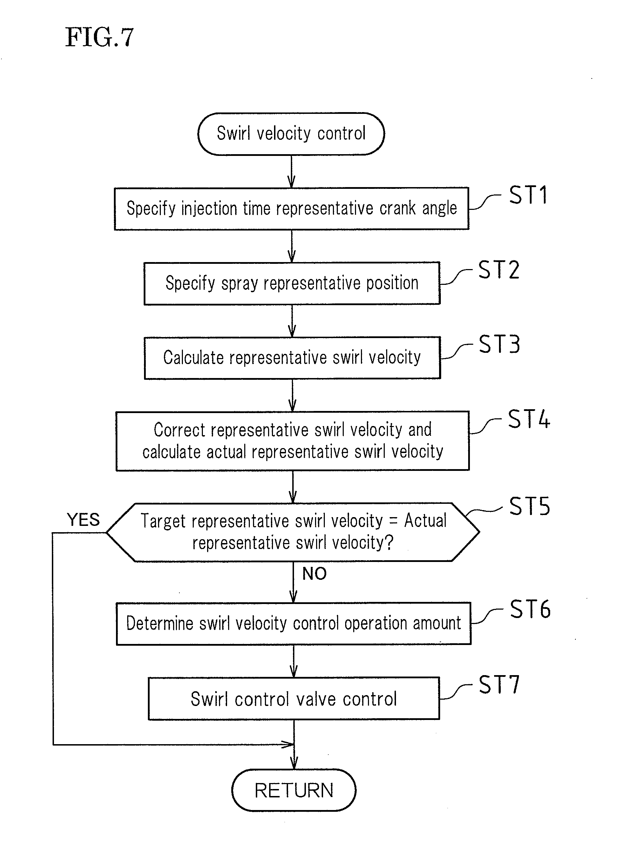

FIG. 7 is a flowchart showing the procedure of swirl velocity control.
[FIG. 8]

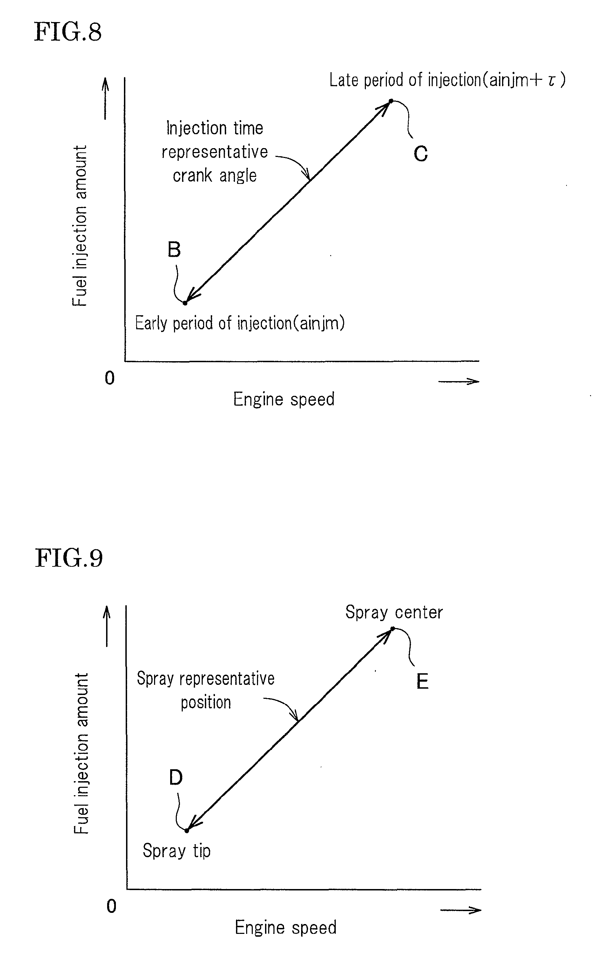

FIG. 8 is a diagram showing an injection time representative crank angle specifying map for specifying an injection time representative crank angle based on the engine speed and the fuel injection amount.
[FIG. 9]
FIG. 9 is a diagram showing a spray representative position specifying map for specifying a spray representative position based on the engine speed and the fuel injection amount.
[FIG. 10]

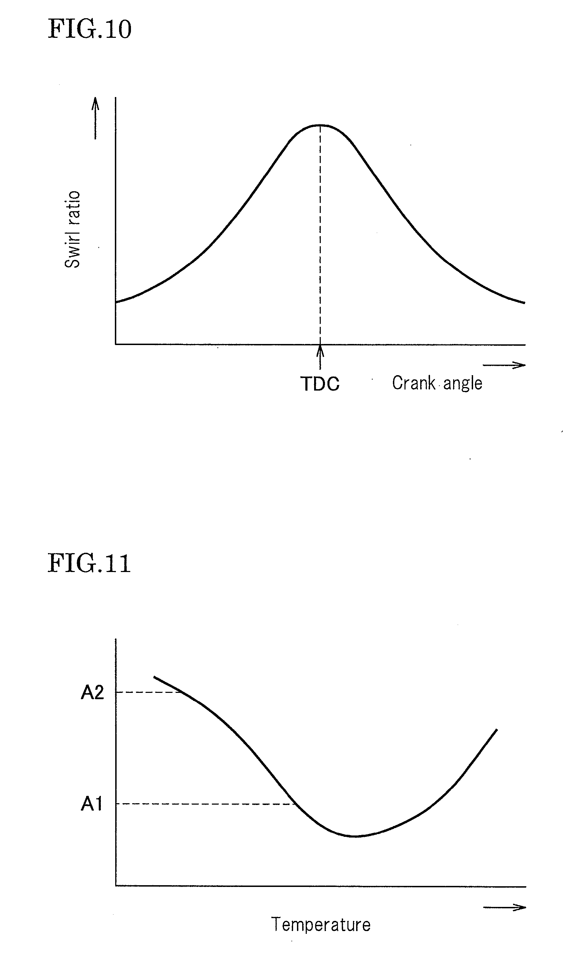

FIG. 10 is a diagram showing a swirl ratio map for obtaining a swirl ratio according to the injection time representative crank angle.
[FIG. 11]
FIG. 11 is a diagram showing an in-cylinder temperature correction map for performing temperature correction on a representative swirl velocity.
[FIG. 12]

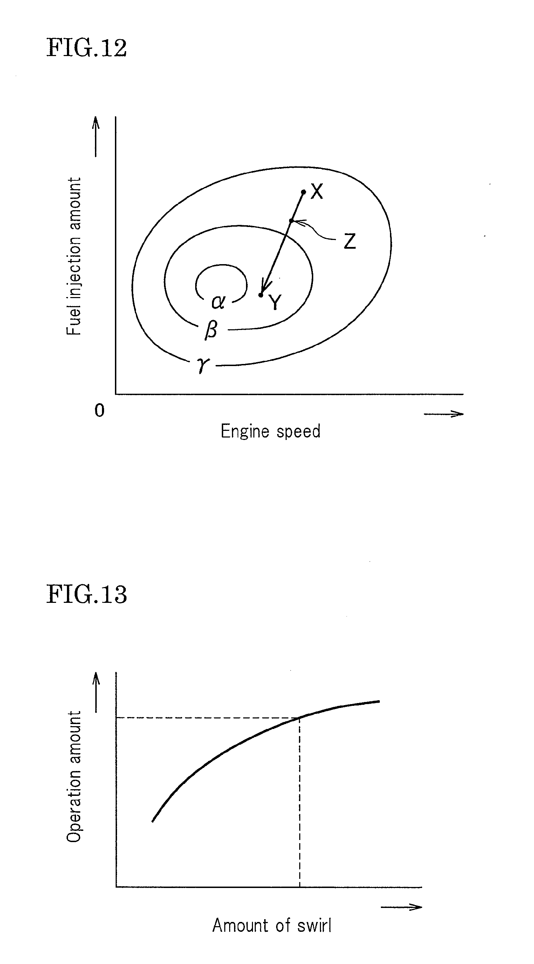

FIG. 12 is a diagram showing a reference target swirl ratio map for obtaining a reference target swirl ratio based on the engine speed and the fuel injection amount.
[FIG. 13]
FIG. 13 is a diagram showing a swirl control valve operation amount map indicating the relation between a target amount of swirl and a swirl control valve operation amount.
[FIG. 14]

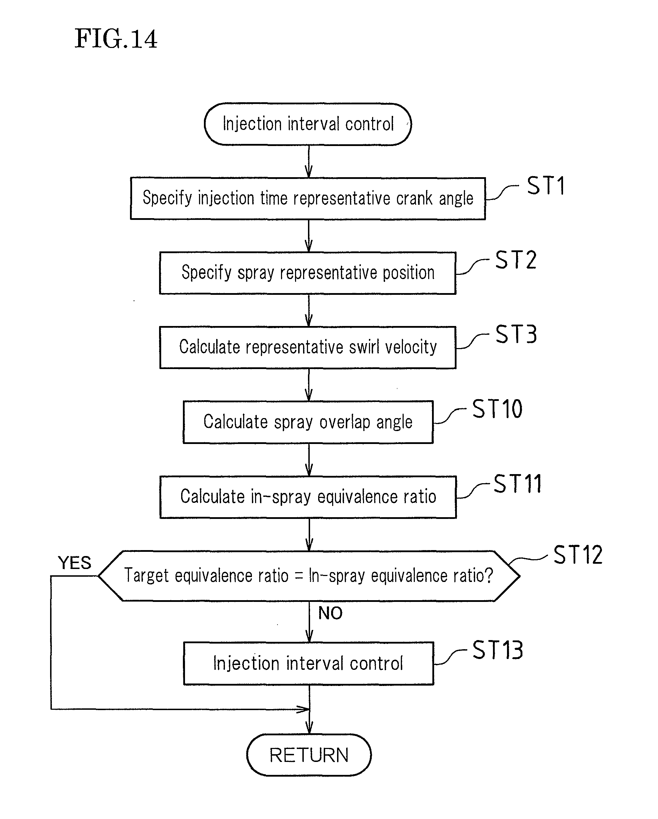

FIG. 14 is a flowchart showing the procedure of injection interval control.
[FIG. 15]

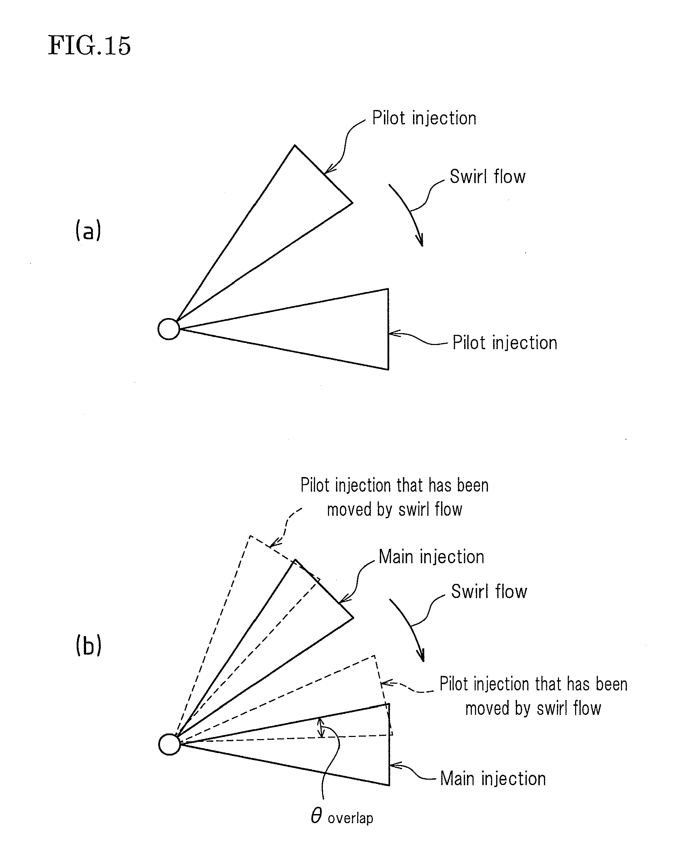

FIG. 15 shows schematic diagrams of the respective sprays for depicting an overlap region between a spray in a pilot injection and a spray in a main injection, and FIG. 15 (a) schematically shows sprays at the end of the pilot injection, and FIG. 15 (b) schematically shows sprays at the end of the main injection.
[FIG. 16]

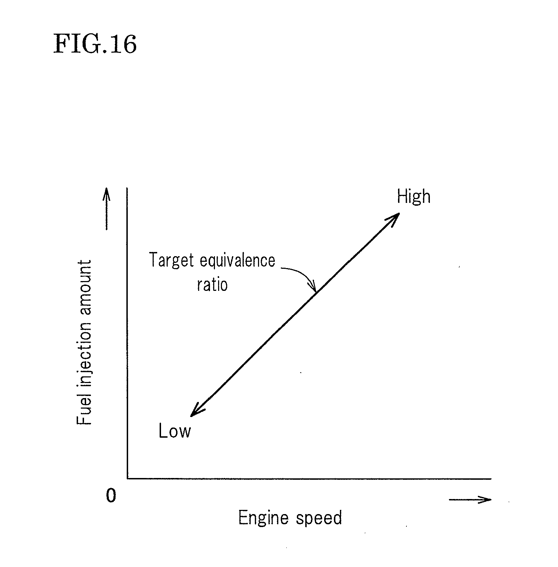

FIG. 16 shows a target equivalence ratio map for obtaining a target equivalence ratio based on the engine speed and the fuel injection amount.
[FIG. 17]

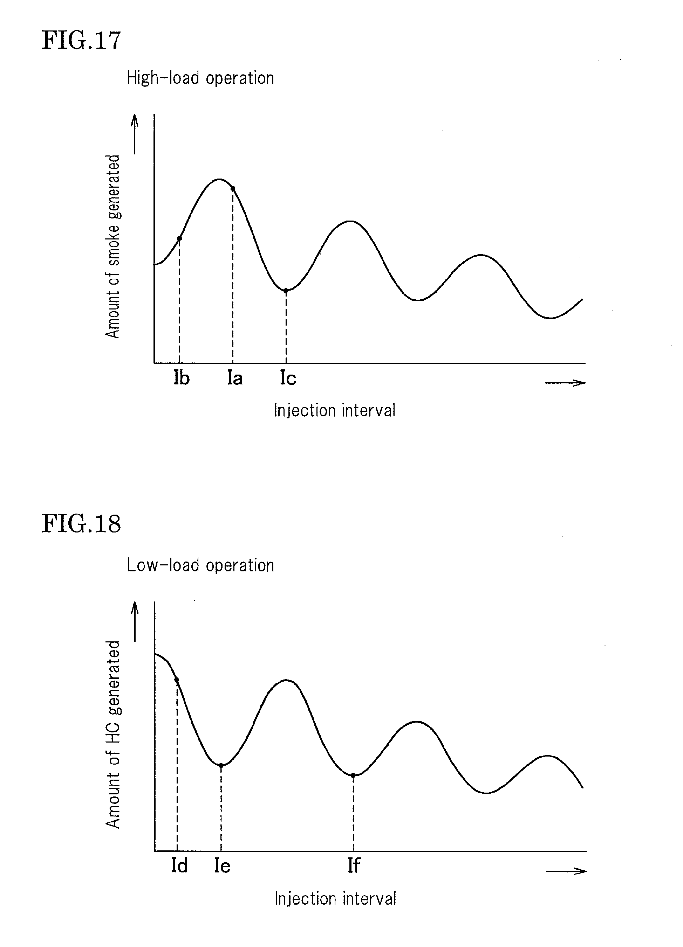

FIG. 17 is a diagram showing the relation between an injection interval and an amount of smoke generated when the engine is operated under a high load.
[FIG. 18]
FIG. 18 is a diagram showing the relation between an injection interval and an amount of HC generated when the engine is operated under a low load.
[FIG. 19]

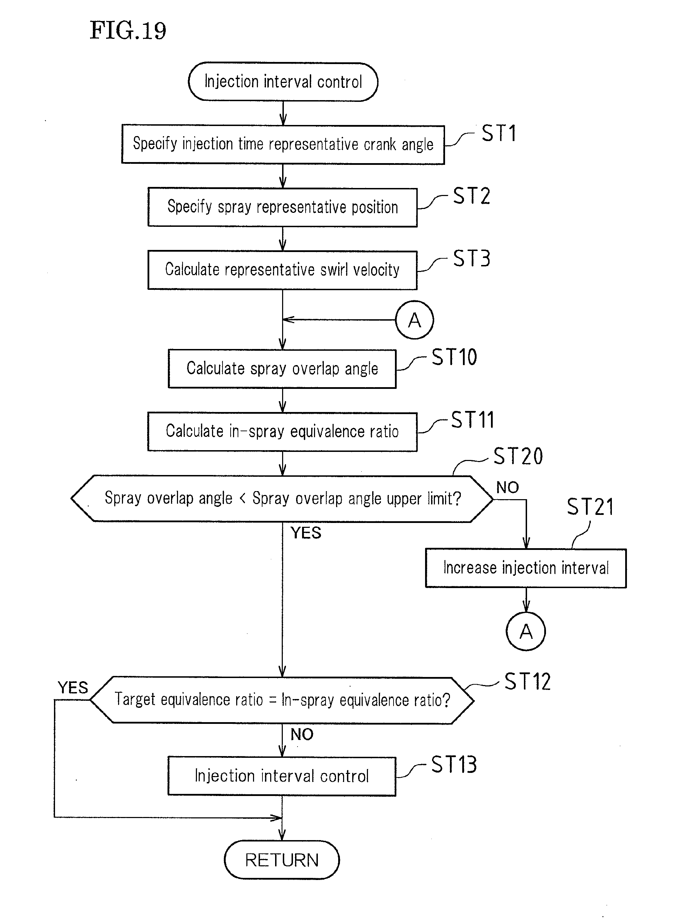

FIG. 19 is a flowchart showing a variation of the control procedure of the fuel injection interval control.

[Mode for Carrying Out the Invention]

Embodiments of the invention will be described below with reference to the drawings. In the present embodiment, a case will be described in which the invention is applied to a common rail in-cylinder direct injection multi-cylinder (for example, inline four-cylinder) diesel engine (compression self-ignition internal combustion engine) mounted in an automobile.

- Engine configuration -

First, the overall configuration of a diesel engine (hereinafter simply referred to as an "engine") according to the present embodiment will be described.
FIG. 1 is a schematic configuration diagram of an engine 1 and a control system of the engine 1 according to the present embodiment. FIG. 2 is a cross-sectional view showing a combustion chamber 3 of the diesel engine and parts in the vicinity of the combustion chamber 3.

As shown in FIG. 1, the engine 1 according to the present embodiment is configured as a diesel engine system having a fuel supply system 2, the combustion chambers 3, an intake system 6, an exhaust system 7, and the like as its main portions.

The fuel supply system 2 is provided with a supply pump 21, a common rail 22, injectors (fuel injection valves) 23, a cutoff valve 24, a fuel addition valve 26, an engine fuel path 27, an added fuel path 28, and the like.

The supply pump 21 draws fuel from a fuel tank, and after putting the drawn fuel under high pressure, supplies the fuel to the common rail 22 via the engine fuel path 27. The common rail 22 has a function as an accumulation chamber where the high pressure fuel supplied from the supply pump 21 is held (accumulated) at a specific pressure, and this accumulated fuel is distributed to each injector 23. The injectors 23 are each configured from a piezo injector within which a piezoelectric element (piezo element) is provided, and which supplies fuel by injection into the combustion chambers 3 by appropriately opening a valve. The details of control of fuel injection from the injectors 23 will be described later.

Also, the supply pump 21 supplies part of the fuel drawn from the fuel tank to the fuel addition valve 26 via the added fuel path 28. In the added fuel path 28, the cutoff valve 24 is provided in order to stop fuel addition by cutting off the added fuel path 28 during an emergency.

The fuel addition valve 26 is configured from an electronically controlled opening/closing valve whose valve opening period is controlled with an addition control operation by an ECU 100 such that the amount of fuel added to the exhaust system 7 becomes a target addition amount (an addition amount with which exhaust A/F becomes target A/F), or such that a fuel addition timing matches a predetermined timing. In other words, a desired amount of fuel is supplied from the fuel addition valve 26 by injection to the exhaust system 7 (to an exhaust manifold 72 from exhaust ports 71) at a suitable timing.

The intake system 6 is provided with an intake manifold 63 connected to an intake port 15a formed in a cylinder head 15 (see FIG. 2), and an intake pipe 64 that constitutes an intake path is connected to the intake manifold 63. Also, in this intake path, an air cleaner 65, an airflow meter 43, and a throttle valve (intake throttling valve) 62 are disposed in order from the upstream side. The airflow meter 43 outputs an electrical signal according to the amount of air that flows into the intake path via the air cleaner 65.

Also, the intake system 6 includes a swirl control valve (variable swirl velocity mechanism) 66 for varying the swirl flow (swirling flow in the horizontal direction) in the combustion chamber 3 (see FIG. 2). Specifically, as the above-described intake port 15a, two systems of normal port and swirl port are provided in each cylinder, and the swirl control valve 66 composed of a butterfly valve capable of adjusting the opening degree is disposed in the normal port 15a shown in FIG. 2. An actuator, not shown in the drawings, is connected to the swirl control valve 66, and the flow rate of air that passes the normal port 15a can be varied according to the opening degree of the swirl control valve 66, which is adjusted by the driving of the actuator. The larger the opening degree of the swirl control valve 66 is, the larger the amount of air drawn in from the normal port 15a into the cylinder is. For this reason, swirl that has been generated by the swirl port (not shown in FIG. 2) is relatively weakened so as to be a low swirl (state of a low swirl velocity) in the cylinder. In contrast, the smaller the opening degree of the swirl control valve 66 is, the smaller the amount of air drawn in from the normal port 15a into the cylinder is. For this reason, swirl that has been generated by the swirl port is relatively strengthened so as to be a high swirl (state of a high swirl velocity) in the cylinder.

The exhaust system 7 is provided with the exhaust manifold 72 connected to the exhaust ports 71 formed in the cylinder head 15, and exhaust pipes 73 and 74 that constitute an exhaust path are connected to the exhaust manifold 72. Also, in this exhaust path, a maniverter (exhaust purification apparatus) 77 is disposed that is provided with a NOx storage catalyst (NSR catalyst: NOx storage reduction catalyst) 75 and a diesel particulate-NOx reduction catalyst (DPNR catalyst) 76. Hereinafter, this NSR catalyst 75 and DPNR catalyst 76 will be described.

The NSR catalyst 75 is a storage reduction NOx catalyst and is configured using, for example, alumina ($Al_2O_3$)

as a support, with, for example, an alkali metal such as potassium (K), sodium (Na), lithium (Li), or cesium (Cs), an alkaline earth element such as barium (Ba) or calcium (Ca), a rare earth element such as lanthanum (La) or yttrium (Y), and a precious metal such as platinum (Pt) supported on this support.

The NSR catalyst 75, in a state in which a large amount of oxygen is present in exhaust gas, stores NOx, and in a state in which the oxygen concentration in exhaust gas is low and a large amount of reduction component (for example, an unburned component of fuel (HC)) is present, reduces NOx to $NO_2$ or NO and releases the resulting $NO_2$ or NO. NOx that has been released as $NO_2$ or NO is further reduced due to quickly reacting with HC or CO in exhaust gas and becomes $N_2$. Also, by reducing $NO_2$ or NO, HC and CO themselves are oxidized and thus become $H_2O$ and $CO_2$. In other words, by appropriately adjusting the oxygen concentration or the HC component in exhaust gas introduced into the NSR catalyst 75, it is possible to purify HC, CO, and NOx in the exhaust gas. In the configuration of the present embodiment, adjustment of the oxygen concentration or the HC component in exhaust gas can be performed with an operation to add fuel from the fuel addition valve 26.

On the other hand, in the DPNR catalyst 76, a NOx storage reduction catalyst is supported on a porous ceramic structure, for example, and PM in exhaust gas is captured while passing through a porous wall. When the air-fuel ratio of the exhaust gas is lean, NOx in the exhaust gas is stored in the NOx storage reduction catalyst, and when the air-fuel ratio is rich, the stored NOx is reduced and released. Furthermore, a catalyst that oxidizes/burns the captured PM (for example, an oxidization catalyst whose main component is a precious metal such as platinum) is supported on the DPNR catalyst 76.

Here, the configuration of the combustion chamber 3 of the diesel engine and parts in the vicinity of the combustion chamber 3 will be described with reference to FIG. 2. As shown in FIG. 2, in a cylinder block 11 that constitutes part of the engine, a cylindrical cylinder bore 12 is formed in each cylinder (each of four cylinders), and a piston 13 is housed within each cylinder bore 12 such that the piston 13 can slide in the vertical directions.

The combustion chamber 3 is formed on the top side of a top face 13a of the piston 13. In other words, the combustion chamber 3 is defined by a lower face of the cylinder head 15 installed on top of the cylinder block 11 via a gasket 14, an inner wall face of the cylinder bore 12, and the top face 13a of the piston 13. A cavity (recess) 13b is concavely provided in substantially the center of the top face 13a of the piston 13, and this cavity 13b also constitutes part of the combustion chamber 3.

The shape of this cavity 13b is such that the recess size of its center portion (on a cylinder centerline P) is small, and the recess size is increased toward the peripheral side. That is, as shown in FIG. 2, when the piston 13 is near the compression top dead center, the combustion chamber 3 formed by this cavity 13b is configured such that the combustion chamber is a narrow space having a relatively small volume at the center portion, and the space is gradually expanded toward the peripheral side.

A small end 18a of a connecting rod 18 is linked to the piston 13 by a piston pin 13c, and a large end of the connecting rod 18 is linked to a crankshaft that is an engine output shaft. Thus, back and forth movement of the piston 13 within the cylinder bore 12 is transmitted to the crankshaft via the connecting rod 18, and engine output is obtained due to rotation of this crankshaft. Also, a glow plug 19 is disposed facing the combustion chamber 3. The glow plug 19 glows due to the flow of electrical current immediately before the engine 1 is started, and functions as a starting assistance apparatus whereby ignition and combustion are promoted due to part of a fuel spray being blown onto the glow plug.

In the cylinder head 15, the intake port 15a that introduces air into the combustion chamber 3 and the exhaust port 71 that discharges exhaust gas from the combustion chamber 3 are formed, and an intake valve 16 that opens/closes the intake port 15a and an exhaust valve 17 that opens/closes the exhaust port 71 are disposed. The intake valve 16 and the exhaust valve 17 are disposed facing each other on either side of a cylinder centerline P. That is, this engine 1 is configured as a cross flow-type engine. Also, the injector 23 that injects fuel directly into the combustion chamber 3 is installed in the cylinder head 15. The injector 23 is disposed substantially in the center above the combustion chamber 3, in an erect orientation along the cylinder centerline P, and injects fuel introduced from the common rail 22 toward the combustion chamber 3 at a specific timing.

Furthermore, as shown in FIG. 1, the engine 1 is provided with a turbocharger 5. This turbocharger 5 is equipped with a turbine wheel 52 and a compressor wheel 53 that are linked via a turbine shaft 51. The compressor wheel 53 is disposed facing the inside of the intake pipe 64, and the turbine wheel 52 is disposed facing the inside of the exhaust pipe 73. Thus the turbocharger 5 uses exhaust flow (exhaust pressure) received by the turbine wheel 52 to rotate the compressor wheel 53, thereby performing a so-called supercharging operation that increases the intake pressure. In this embodiment, the turbocharger 5 is a variable nozzle-type turbocharger, in which a variable nozzle vane mechanism (not shown) is provided on the turbine wheel 52 side, and by adjusting the opening degree of this variable nozzle vane mechanism, it is possible to adjust the supercharging pressure of the engine 1.

An intercooler 61 for forcibly cooling intake air heated due to supercharging with the turbocharger 5 is provided in the intake pipe 64 of the intake system 6.

The throttle valve 62 provided on the downstream side from the intercooler 61 is an electronically controlled opening/closing valve whose opening degree is capable of stepless adjustment, and has a function to constrict the area of the channel of intake air under specific conditions, and thus adjust (reduce) the amount of intake air supplied.

Also, the engine 1 is provided with an exhaust gas recirculation path (EGR path) 8 that connects the intake system 6 and the exhaust system 7. The EGR path 8 decreases the combustion temperature by appropriately directing part of the exhaust gas back to the intake system 6 and resupplying that exhaust gas to the combustion chamber 3, thus suppressing the amount of NOx generated. Also, provided in the EGR path 8 are an EGR valve 81 that, by being opened/closed steplessly under electronic control, is capable of freely adjusting the flow rate of exhaust gas that flows through the EGR path 8, and an EGR cooler 82 for cooling exhaust that passes through (recirculates through) the EGR path 8. The EGR device (exhaust gas recirculating device) is configured with this EGR path 8, EGR valve 81, EGR cooler 82, and the like.

- Sensors -

Various sensors are installed at respective sites of the engine 1, and these sensors output signals related to environmental conditions at the respective sites and the operation state of the engine 1.

For example, the airflow meter 43 outputs a detection signal according to the flow rate of intake air (the amount of intake air) on the upstream side of the throttle valve 62 within the intake system 6. An intake temperature sensor 49 is disposed in the intake manifold 63 and outputs a detection signal according to the temperature of intake air. An intake pressure sensor 48 is disposed in the intake manifold 63 and outputs a detection signal according to the intake air pressure. An A/F (air-fuel ratio) sensor 44 outputs a detection signal that continuously changes according to the oxygen concentration in exhaust gas on the downstream side of the maniverter 77 of the exhaust system 7. An exhaust temperature sensor 45 likewise outputs a detection signal according to the temperature of exhaust gas (exhaust temperature) on the downstream side of the maniverter 77 of the exhaust system 7. A rail pressure sensor 41 outputs a detection signal according to the pressure of fuel accumulated in the common rail 22. A throttle position sensor 42 detects the opening degree of the throttle valve 62.

-ECU-

As shown in FIG. 3, the ECU 100 is provided with a CPU 101, a ROM 102, a RAM 103, a backup RAM 104, and the like. In the ROM 102, various control programs, maps that are referred to when executing those various control programs, and the like are stored. The CPU 101 executes various computational processes based on the various control programs and maps stored in the ROM 102. The RAM 103 is a memory that temporarily stores data resulting from computation with the CPU 101 or data that has been input from the respective sensors. The backup RAM 104 is a nonvolatile memory that stores that data or the like to be saved when the engine 1 is stopped, for example.

The CPU 101, the ROM 102, the RAM 103, and the backup RAM 104 are connected to each other via a bus 107, and are connected to an input interface 105 and an output interface 106 via the bus 107.

The input interface 105 is connected to the rail pressure sensor 41, the throttle position sensor 42, the airflow meter 43, the A/F sensor 44, the exhaust temperature sensor 45, the intake pressure sensor 48, and the intake temperature sensor 49. Furthermore, the input interface 105 is connected to a water temperature sensor 46 that outputs a detection signal according to the coolant temperature of the engine 1, an accelerator opening degree sensor 47 that outputs a detection signal according to the amount of accelerator pedal depression, a crank position sensor 40 that outputs a detection signal (pulse) each time the output shaft (crankshaft) of the engine 1 rotates a specific angle, and the like.

On the other hand, the supply pump 21, the injector 23, the fuel addition valve 26, the throttle valve 62, the swirl control valve 66, the EGR valve 81 and the like are connected to the output interface 106. In addition, an actuator (not shown in the drawings) provided in the variable nozzle vane mechanism of the turbocharger 5 is connected to the output interface 106.

The ECU 100 executes various controls of the engine 1 based on outputs from the various sensors, calculated values obtained by arithmetic expressions that use the output values, or various maps stored in the ROM 102.

For example, the ECU 100 executes a pilot injection (auxiliary injection) and a main injection as a fuel injection control of the injector 23.

The pilot injection is an operation of injecting a small amount of fuel in advance, prior to the main injection from the injector 23. Also, the pilot injection is an injection operation for suppressing a fuel ignition delay by the main injection, thereby leading to a stable diffusion combustion, which is also referred to as an auxiliary injection. Also, the pilot injection of the present embodiment has, in addition to a function to suppress the initial combustion speed by the main injection, a preheating function to increase the internal temperature of the cylinder. That is, after executing the pilot injection, fuel injection is suspended, and the temperature of the compressed gas (the temperature in the cylinder) is sufficiently increased before the main injection is started such that the self-ignition temperature of the fuel (for example, 1000 K) is reached, thereby securing favorable ignition of fuel sprayed in the main injection.

The main injection is an injection operation for generating a torque to the engine 1 (operation for supplying fuel for generating torque). The fuel injection amount in this main injection is determined, basically, such that the required torque is obtained according to the operation states, such as the engine speed, the amount of accelerator operation, the coolant temperature, and the intake air temperature. For example, the greater the engine speed (the engine speed calculated based on the value detected by the crank position sensor 40) or the greater the amount of accelerator operation (the amount of accelerator pedal depression detected by the accelerator opening degree sensor 47) (i.e., the greater the accelerator opening degree), the greater the resulting torque requirement value of the engine 1. Accordingly, the fuel injection amount in the main injection is set to a larger amount.

Note that other than the pilot injection and the main injection described above, an after-injection or a post-injection is executed as necessary. The after-injection is an injection operation for increasing the exhaust gas temperature. Specifically, the after-injection is performed at a timing at which majority of the combustion energy of supplied fuel is obtained as exhaust heat energy instead of being converted into a torque of the engine 1. Also, the post-injection is an injection operation for increasing the temperature of the maniverter 77 by directly introducing fuel into the exhaust system 7. For example, when the amount of PM captured by and deposited in the DPNR catalyst 76 has exceeded a specific amount (for example, indicated from detection of a before/after pressure difference of the maniverter 77), the post-injection is executed.

Also, the ECU 100 controls the opening degree of the EGR valve 81 according to the operation state of the engine 1, and adjusts the amount of exhaust gas recirculated towards the intake manifold 63 (EGR amount). This EGR amount is set according to an EGR map stored in advance in the ROM 102. Specifically, the EGR map is a map for determining the EGR amount (EGR rate) using the engine speed and the engine load as parameters. Note that this EGR map is created in advance through experimentation, simulation, or the like. In other words, the EGR amount (opening degree of the EGR valve 81) is obtained by applying to the EGR map, the engine speed calculated based on the detection value from the crank position sensor 40 and the opening degree of the throttle valve 62 (corresponding to the engine load) calculated by the throttle opening degree sensor 42.

The ECU 100 furthermore executes opening degree control on the swirl control valve 66. The opening degree control executed on the swirl control valve 66 is performed so as to change the amount of circumferential movement in a cylinder per unit time (or per unit of crank rotation angle) of a spray of fuel injected into the combustion chamber 3. This opening degree control of the swirl control valve 66 will be described below in detail.

- Fuel injection pressure -

The fuel injection pressure when executing the fuel injection is determined based on the internal pressure of the common rail 22. In regard to the internal pressure of the common rail, normally, the higher the engine load and the greater the engine speed, the greater the target value for the pressure of fuel supplied from the common rail 22 to the injectors 23 (i.e., the target rail pressure). In other words, when the engine load is high, a large amount of air is drawn into the combustion chamber 3, making it necessary to inject a large amount of fuel into the combustion chamber 3 from the injectors 23, and therefore the pressure of injection from the injectors 23 needs to be high. Also, when the engine speed is high, the period during which injection is possible is short, making it necessary to inject a large amount of fuel per unit time, and therefore the pressure of injection from the injectors 23 needs to be high. In this way, the target rail pressure is normally set based on the engine load and the engine speed. Note that the target rail pressure is set in accordance with, for example, a fuel pressure setting map stored in the ROM 102. Specifically, the valve opening period (injection rate waveform) of the injectors 23 is controlled through determining the fuel pressure according to this fuel pressure setting map, thus enabling the amount of fuel injected during the valve opening period to be specified.

Note that in the present embodiment, the fuel pressure is adjusted between 30MPa and 200MPa according to the engine load or the like.

The optimal values of fuel injection parameters for the pilot injection, the main injections and the like differ depending on the temperature conditions of the engine 1, intake air, and the like.

For example, the ECU 100 adjusts the amount of fuel discharged by the supply pump 21 such that the common rail pressure is equal to the target rail pressure set based on the operation state of the engine, i.e., such that the fuel injection pressure matches the target injection pressure. Also, the ECU 100 determines the fuel injection amount and the fuel injection form based on the operation state of the engine. Specifically, the ECU 100 calculates an engine rotational speed based on the value detected by the crank position sensor 40, obtains the amount of accelerator pedal depression (accelerator opening degree) based on the value detected by the accelerator opening degree sensor 47, and determines the total fuel injection amount (a sum of injection amounts in the pilot injection and the main injection) based on the engine rotational speed and the accelerator opening degree.

- Brief description of combustion forms -

Next is a brief description of forms of combustion within the combustion chamber 3 of the engine 1 according to the present embodiment.

FIG. 4 schematically shows a state in which gas (air) is drawn into one of the cylinders of the engine 1 through the intake manifold 63 and the intake port 15a, combustion is performed by fuel injection from the injector 23 into the combustion chamber 3, and the combusted gas is discharge to the exhaust manifold 72 through the exhaust ports 71.

As shown in FIG. 4, gas drawn into the cylinder contains fresh air drawn in from the intake pipe 64 via the throttle valve 62, and EGR gas drawn in from the EGR path 8 when the aforementioned EGR valve 81 opens. The ratio of the amount (mass) of EGR gas to the sum of the amount (mass) of fresh air drawn in and the amount (mass) of EGR gas drawn in (that is, EGR ratio) changes according to the opening degree of the EGR valve 81 that is appropriately controlled by the ECU 100 according to the operation state.

Fresh air and EGR gas drawn into the cylinder in this manner are drawn into the cylinder along with the lowering of the piston 13 (not shown in FIG. 4) via the intake valve 16 that opens in the intake stroke, and become in-cylinder gas. This in-cylinder gas is sealed in the cylinder as a result of the intake valve 16 being closed at a valve closure time that is determined according to the operation state of the engine 1 (achieving a state in which the in-cylinder gas is sealed), and thereafter, compressed in the compression stroke along with the rising of the piston 13. Then, when the piston 13 has reached near the top dead center, the injector 23 opens for a predetermined period of time through the above-described injection amount control performed by the ECU 100 such that fuel is directly injected into the combustion chamber 3. Specifically, the pilot injection is executed before the piston 13 reaches the top dead center, and after the fuel injection is suspended, the main injection is executed when the piston 13 has reached near the top dead center after a predetermined interval.

FIG. 5 is a cross-sectional view of the combustion chamber 3 and parts in the vicinity of the combustion chamber 3 at the time of this fuel injection. FIG. 6 is a plan view of the combustion chamber 3 (diagram showing the top face of the piston 13) at the time of this fuel injection. As shown in FIG. 6, eight nozzles are provided in the injector 23 of the engine 1 according to the present embodiment at equal intervals in the circumferential direction such that fuel is equally injected from these nozzles. Note that the number of the nozzles is not limited to eight.

Each spray A of fuel injected from the nozzles is diffused substantially conically. Also, since the fuel injection (the pilot injection or the main injection) from the nozzles is performed when the piston 13 has reached near the compression top dead center, each spray A of fuel is diffused in the cavity 13b, as shown in FIG. 5.

In this manner, each spray A of fuel injected from the nozzles formed in the injector 23 is mixed with an in-cylinder gas with the lapse of time so as to form an air-fuel mixture, which is diffused conically inside the cylinder, and undergoes combustion by self-ignition. That is, each fuel spray A forms a substantially conical combustion field with the in-cylinder gas, and combustion starts in each of the combustion fields (eight combustion fields in the present embodiment).

The energy generated by this combustion serves as kinetic energy for pushing down the piston 13 toward the bottom dead center (energy to serve as engine output), heat energy for increasing the temperature inside the combustion chamber 3, or heat energy radiated to the outside (for example, to the coolant) via the cylinder block 11 or the cylinder head 15.

The combusted in-cylinder gas is discharged to the exhaust ports 71 and the exhaust manifold 72 along with the rising of the piston 13 via the exhaust valve 17 that opens in the discharge stroke.

-Operation for expanding the scope of usage of swirl flow -

One of the features of the present invention is expansion of the scope of usage of swirl flow, whose velocity is controlled by the above-described adjustment of the opening degree of the swirl control valve 66. Specifically, the control parameters of the engine 1 (swirl velocity, fuel injection interval and the like) are controlled according to the operation state of the engine 1, after a swirl velocity (hereinafter referred to as a "representative swirl velocity") at a predetermined timing (the predetermined timing is specified by the crank angle position, and is hereinafter referred to as an "injection time representative crank angle") and in a specified position in a spray (the specified position in a spray is a position in the length direction of a spray, which is a position in the radial direction of the cylinder, and is hereinafter referred to as a "spray representative position") is determined.

First and second embodiments described below show a specific example of this operation for expanding the scope of usage of swirl flow. The first embodiment performs control of the swirl velocity (specifically, control of the swirl control valve 66), after the "representative swirl velocity" at the specified "injection time representative crank angle" and in the specified "spray representative position" is determined. The second embodiment performs control (control of the injector 23) of the fuel injection interval (specifically, a no fuel injection period from the end point of time of the pilot injection to the start point of time of the main injection), after the "representative swirl velocity" at the specified "injection time representative crank angle" and in the specified "spray representative position" is determined. The embodiments will now be described below in detail.

First embodiment

The present embodiment performs control of the swirl velocity after the "representative swirl velocity" at the specified "injection time representative crank angle" and in the specified "spray representative position" is determined, as described above.

As a general description, in this swirl velocity control, first, the "injection time representative crank angle", which is a timing for obtaining the "representative swirl velocity", as well as the "spray representative position", which is a specific position in the spray (in the spray of fuel injected in the main injection) for obtaining the "representative swirl velocity", are specified according to the operation state (engine load and engine speed) of the engine 1. Then, the "representative swirl velocity" at the specified "injection time representative crank angle" and in the specified "spray representative position", and an actual swirl velocity (hereinafter referred to as an "actual representative swirl velocity") that is obtained by performing temperature correction on this "representative swirl velocity" are calculated.

Then, a "target representative swirl velocity (at the time of a transient operation or the like, a swirl velocity that includes a correction amount according thereto)", which serves as a target, is calculated based on the current operation state of the engine 1, and the opening degree of the swirl control valve 66 is adjusted such that the "actual representative swirl velocity" matches the "target representative swirl velocity".

The swirl velocity control of the present embodiment will now be specifically described below. FIG. 7 is a flowchart showing the procedure of this swirl velocity control. The flowchart is repeatedly executed every predetermined period of time (for example, several milliseconds) after the operation of the engine 1 is started.

First, at step ST1, the "injection time representative crank angle" is specified. This "injection time representative crank angle" represents a timing for obtaining the "representative swirl velocity" (crank angle position), as described above, and is specified according to the engine speed and the fuel injection amount (which corresponds to engine load) (operation for specifying a timing for calculating the swirl velocity performed by a representative timing specifying means).

FIG. 8 is a map for specifying the "injection time representative crank angle" (injection time representative crank angle specifying map), which is created in advance through experimentation, simulation, or the like, and stored in the ROM 102. The "injection time representative crank angle" is specified by applying the current engine speed and the current fuel injection amount (the amount of fuel injected in the main injection into the cylinder that has reached the combustion stroke) to this injection time representative crank angle specifying map. With respect to the "injection time representative crank angle", the lower the engine speed is, or the smaller the fuel injection amount is, the "injection time representative crank angle" is specified to be further toward the side of early period of the fuel injection period (an angle of advance side in the fuel injection period), and the higher the engine speed is, or the larger the fuel injection amount is, the "injection time representative crank angle" is specified to be further toward the side of late period of the fuel injection period (an angle of delay side in the fuel injection period).

Specifically, "ainjm" in FIG. 8 indicates the crank angle position at the fuel injection start point of time, and "$\tau$" indicates the fuel injection period (a value converted into a crank angle). In this manner, in the case where the engine speed is low and also the fuel injection amount is small, a crank angle position that corresponds to an early period after fuel injection is started is specified as the "injection time representative crank angle", and in the case where the engine speed is high and also the fuel injection amount is large, a crank angle position that corresponds to a late period of the fuel injection period is specified as the "injection time representative crank angle". For example, at the point B in FIG. 8, a fuel injection start point of time (ainjm) serves as the "injection time representative crank angle", and at the point C, a fuel injection end point of time (ainjm + $\tau$) is obtained as the "injection time representative crank angle".

The reason for this is as follows. In the case where the engine speed is low and also the fuel injection amount is small (at the time of low-load operation), there is a possibility that the equivalence ratio (or an excess oxygen ratio) in the combustion field is lean and the ignitability of the air-fuel mixture deteriorates, or the amount of HC generated increases in an early period of the combustion period. Thus, an early period after fuel injection is started, which greatly affects the ignitability or the amount of HC generated, is specified as the "injection time representative crank angle", and the swirl velocity at this early period after the fuel injection is started is adjusted to an appropriate value (the swirl velocity is adjusted to an appropriate value by the swirl velocity control described below), thereby achieving a favorable ignitability of the air-fuel mixture, and also suppressing the amount of HC generated to be within the ranges required by regulations. In contrast, in the case where the engine speed is high and also the fuel injection amount is large (at the time of high-load operation), there is a possibility that the equivalence ratio in the combustion field is rich and the amount of smoke generated increases in a late period of the combustion period. Thus, a late period of the fuel injection period, which greatly affects the amount of smoke generated, is specified as the "injection time representative crank angle", and the swirl velocity in the late period of the fuel injection period is adjusted to an appropriate value (the swirl velocity is adjusted to an appropriate value by the swirl velocity control described below), thereby suppressing the amount of smoke generated to be within the ranges required by regulations.

After the "injection time representative crank angle" is obtained in this manner, the procedure moves to step ST2, where the "spray representative position" is specified. The "spray representative position" is, as described above, a predetermined position in the spray length direction (position in the radial direction of the cylinder) for obtaining the "representative swirl velocity" and is specified according to the engine speed and the fuel injection amount (which correspond to engine load) (operation for specifying a position in a cylinder for calculating the swirl velocity performed by representative position specifying means).

FIG. 9 is a map for specifying the "spray representative position" (spray representative position specifying map), which is created in advance through experimentation, simulation, or the like, and stored in the ROM 102. The "spray representative position" is specified by applying the current engine speed and the current fuel injection amount (the amount of fuel injected in the main injection into the cylinder that has reached the combustion stroke) to this spray representative position specifying map. With respect to the "spray representative position", the lower the engine speed is, or as the smaller the fuel injection amount is, a position further toward the tip side in the spray length direction (a position on the peripheral side in the longitudinal direction of the spray) is specified as the "spray representative position", and the higher the engine speed is, or the larger the fuel injection amount is, a position further away from the tip side in the spray length direction (a position on near the center in the longitudinal direction of the spray) is specified as the "spray representative position".

Specifically, for example, at the point D in FIG. 9, a spray tip position (position on the peripheral edge) is obtained as the "spray representative position", and at the point E, the central position in the spray length direction is obtained as the "spray representative position".

The reason for this is as follows. In the case where the engine speed is low and also the fuel injection amount is small (at the time of low-load operation), there is a possibility that the amount of HC generated may increase due to attachment of fuel to the wall face (attachment of fuel to the inner wall face of the cylinder bore 12). Thus, a spray tip position, which greatly affects the amount of HC generated, is specified as the "spray representative position", and the swirl velocity at the spray tip position is adjusted to an appropriate value (the swirl velocity is adjusted to an appropriate value by the swirl velocity control described below), thereby suppressing the amount of HC generated to be within the ranges required by regulations. In contrast, in the case where the engine speed is high and also the fuel injection amount is large (at the time of high-load operation), the central position in the spray length direction, where the equivalence ratio tends to be rich and thereby causes an increase in the amount of smoke generated, is specified as the "spray representative position", and the swirl velocity at the central position in the spray length direction is adjusted to an appropriate value (the swirl velocity is adjusted to an appropriate value by the swirl velocity control described below), thereby suppressing the amount of smoke generated to be within the ranges required by regulations.

Note that in a region located further inside relative to this central position in the splay length direction (a region close to the injector 23), the particle size of spray is relatively large, and thus an appropriate air-fuel mixture may not be generated. Also, it cannot be guaranteed that the spray in this region flows in the cylinder in the circumferential direction at the same velocity as the swirl velocity. Therefore, in the present embodiment, the range within which the "spray representative position" is specified is set to be a range from the spray tip position to the central position in the spray length direction.

As a specific method for calculating a spray length $L_{sp}$ used for specifying the "spray representative position", Equation (1) and Equation (2) (Hiroyasu's equations) indicated below may be used, for example. Note that Equation

(1) is an equation for calculating the spray length $L_{sp}$ until an elapsed time t from the start of fuel injection reaches a droplet breakup time $t_b$. Equation

(2) is an equation for calculating the spray length $L_{sp}$ after the elapsed time t from the start of fuel injection has exceeded the droplet breakup time $t_b$.

$$
L_{sp} = 
\begin{cases}
0.39(2\Delta P/\rho_f)^{\frac{1}{2}} \cdot t & (0 \leq t \leq t_b) \quad \cdots (1) \\
2.95(\Delta P/\rho_a)^{0.25} \cdot (d_0 t)^{\frac{1}{2}} & (t > t_b) \quad \cdots (2)
\end{cases}
$$

$\Delta P$: Pressure difference between injection pressure and atmosphere pressure  $t_b$: Droplet breakup time
$\rho_f$: Fuel density
$\rho_a$: Atmosphere gas density

$d_0$: Injector nozzle diameter

The spray length $L_{sp}$ is calculated by these Equation (1) and Equation (2), and the "spray representative position" is specified by the distance from the nozzles of the injector 23. Specifically, in the case where the spray tip position is specified as the "spray representative position", that "spray representative position" is located in the position having a distance "$L_{sp}$" from the nozzle of the injector 23, and in the case where the central position in the spray length direction is specified as the "spray representative position", that "spray representative position" is located in the position having a distance "$L_{sp}/2$" from the nozzle of the injector 23.

Next, the procedure moves to step ST3, where the "representative swirl velocity" at the specified "injection time representative crank angle" and in the specified "spray representative position" is calculated. This "representative swirl velocity" is, as described above, a swirl velocity at the "injection time representative crank angle" and in the "spray representative position".

In this operation for calculating the "representative swirl velocity", first, an instantaneous swirl ratio (a value that expresses an instantaneous swirl velocity as a swirl ratio) at the "injection time representative crank angle" is obtained from a map, and the swirl velocity at the "spray representative position", that is, the "representative swirl velocity" is calculated while taking "spray representative position" into consideration based on the obtained swirl ratio.

FIG. 10 is a swirl ratio map for obtaining an instantaneous swirl ratio (swirl ratio for each crank angle) corresponding to the "injection time representative crank angle". This instantaneous swirl ratio is obtained as a value correlated to the angular velocity of swirl at the "injection time representative crank angle", and is obtained for each crank angle as a swirl ratio that is constant in any "spray representative position". In other words, the swirl velocity in the cylinder changes depending on the position of the piston 13. Specifically, the closer the piston 13 is located to the compression top dead center, the higher the swirl velocity is. Also, even if the swirl ratio is the same, the swirl velocity is low in a central portion in the cylinder, and the swirl velocity increases toward the peripheral side in the cylinder. Therefore, the swirl velocity for each crank angle cannot be expressed as a map unless the "spray representative position" is specified. For this reason, first, the swirl ratio for each crank angle is obtained based on the swirl ratio map, and the swirl velocity in the "spray representative position" in the state of the obtained swirl ratio is calculated, thereby calculating the "representative swirl velocity".

Note that the swirl ratio map is determined based on engine specifications such as the inner diameter of the cylinder bore 12, the stroke of the piston 13, the length of the connecting rod 18, the shape of the combustion chamber 3 and the like of the engine 1, and is created in advance according to the engine type through experimentation, simulation, or the like. Also, since it is possible to calculate the swirl ratio for each crank angle based on the law of conservation of angular momentum, the swirl ratio map can also be created based thereon.

By applying the "injection time representative crank angle" specified in the step ST1 to the swirl ratio map, the swirl ratio at that "injection time representative crank angle" is obtained. Then, the "representative swirl velocity" is calculated by inserting the obtained swirl ratio into Equation (3) indicated below.

[Expression 2]

$$\text{Representative swirl velocity} = \text{Swirl ratio} \times 2\pi \times L_r/t_c \quad \cdots \quad (3)$$

$L_r$: Length in the radial direction of the spray representative position

$t_c$: Time required per 360 deg

In this manner, the "representative swirl velocity" at the "injection time representative crank angle" and in the "spray representative position" is calculated. For example, even if the swirl ratio is the same, the closer the "spray representative position" is to the spray tip, the higher the "representative swirl velocity" obtained by the calculation is.

The "representative swirl velocity" calculated as described above may be still different from the "actual representative swirl velocity". Specifically, in the case of a low in-cylinder temperature, evaporation of spray is insufficient, and thus the particle size of spray droplets is large. As a result, the resistance of spray to the swirl flow (resistance to the flow of swirl) is large, and corresponding to that increased amount of resistance, the actual swirl velocity ("actual representative swirl velocity") is lower than the "representative swirl velocity". Also, in the case of a high in-cylinder temperature (for example, 1000 K or higher), a disturbance may occur in the swirl flow, and the actual swirl velocity ("actual representative swirl velocity") may be lower than the "representative swirl velocity" due to this disturbance.

For this reason, taking these into consideration, temperature correction (correction according to a quantity of a state in a cylinder) is performed on the calculated "representative swirl velocity", and thereby the "actual representative swirl velocity" is calculated (step ST4). Specifically, the "actual representative swirl velocity (corrected representative swirl velocity)" is calculated by Equation (4) indicated below (operation for calculating a swirl velocity performed by swirl velocity calculating means).

[Expression 3]

$$\text{Corrected representative swirl velocity} = \text{Representative swirl velocity} \times$$

$$\text{In-cylinder temperature correction coefficient} \quad \cdots \quad (4)$$

In-cylinder temperature correction coefficient: *A2/A1*

FIG. 11 is an in-cylinder temperature correction map, and the in-cylinder temperature correction coefficient is obtained from this in-cylinder temperature correction map. The in-cylinder temperature correction map is created in advance through experimentation, simulation, or the like, and stored in the ROM 102. "A1" in FIG. 11 is a map value at a reference in-cylinder temperature, and "A2" is a map value at an actual in-cylinder temperature. In this case, the obtained in-cylinder temperature correction coefficient is "A2/A1". Note that the reference temperature A1 is set as appropriate. Also the in-cylinder temperature A2 is estimated from a sensing value of the intake temperature sensor 49. Also, the in-cylinder temperature A2 may be estimated based on the operation state of the engine 1.

Next, the procedure moves to step ST5, where the "actual representative swirl velocity" is compared with the "target representative swirl velocity".

The "target representative swirl velocity" can be obtained by calculating a "reference representative swirl velocity (this corresponds to a reference target swirl velocity of the present invention)" based on a "reference target swirl ratio" that is obtained from a reference target swirl ratio map (FIG. 12) created according to the engine type, and performing the temperature correction on the "reference representative swirl velocity".

FIG. 12 is the reference target swirl ratio map, in which the "reference target swirl ratio" can be obtained by applying the current engine speed and the current fuel injection amount (the amount of fuel injected in the main injection into the cylinder that has reached the combustion stroke) to the reference target swirl ratio map. Note that the reference target swirl ratio map is created in advance through experimentation, simulation, or the like, as a map for obtaining a swirl ratio that can achieve an operation state in which various restrictions and requirements such as exhaust emissions, engine performance, and combustion noises are within the ranges required by regulations, and stored in advance in the ROM 102. Also, in the reference target swirl ratio map shown in FIG. 12, the point α indicates "swirl ratio of 3.0", the point β indicates "swirl ratio of 2.5", and the point y indicates "swirl ratio of 2.0". The swirl ratios are not limited to these values.

Then, the "reference representative swirl velocity" is calculated based on the "reference target swirl ratio" obtained from the reference target swirl ratio map. Specifically, the swirl velocity in the "spray representative position" in the state of the "reference target swirl ratio" is calculated using Equation (3), and thereby the "reference representative swirl velocity" is obtained.

The "target representative swirl velocity" is calculated by performing temperature correction similar to that of Equation (4) on the "reference representative swirl velocity" obtained as described above.

For example, in the case where an operation state X (reference target swirl ratio of 2.2) has shifted to an operation state Y (reference target swirl ratio of 2.8) on the reference target swirl ratio map in FIG. 12 due to an operation for rapidly releasing depression of accelerator, which influences the accelerator opening degree, the "reference target swirl ratio" obtained from the reference target swirl ratio map has a value of the operation state Y. However, at the time of such a transition, the in-cylinder temperature is still near the temperature during the operation in the operation state X. Therefore, the "target representative swirl velocity" is calculated by performing temperature correction. For example, the "target representative swirl velocity" corresponding to the point Z (reference target swirl ratio of 2.6) in FIG. 12 is calculated. That is, at such a time of transition of operation of the engine 1, if the target swirl velocity is set according to the "reference target swirl ratio" obtained from the reference target swirl ratio map (if the target swirl velocity is set without performing temperature correction), an error due to a difference in the in-cylinder temperature in excess of the reference temperature may occur, and an appropriate target swirl velocity may not be obtained. For this reason, temperature correction is performed such that the target swirl velocity (target representative swirl velocity) is calculated while taking the transient operation into account.

In step ST 5, if the determination result in step ST5 is "NO" because the "actual representative swirl velocity" does not match the "target representative swirl velocity", the procedure moves to step ST6, where an amount of the swirl velocity control operation is determined according to the deviation (disparity between the "actual representative swirl velocity" and the "target representative swirl velocity"), and in step ST7, the opening degree of the swirl control valve 66 is adjusted by that swirl velocity control operation amount, thereby controlling the swirl velocity. That is, the larger the deviation is, a larger amount of change in the swirl flow velocity is set (operation for adjusting an internal combustion engine control parameter performed by control parameter adjusting means).

Specifically, in the case where the "actual representative swirl velocity" is lower than the "target representative swirl velocity", the larger the deviation therebetween is, the opening degree of the swirl control valve 66 is adjusted to be smaller so as to increase the amount of increase in the swirl flow velocity. In contrast, in the case where the "actual representative swirl velocity" is higher than the "target representative swirl velocity", the larger the deviation therebetween is, the opening degree of the swirl control valve 66 is adjusted to be larger so as to increase the amount of reduction in the swirl flow velocity.

FIG. 13 is a swirl control valve operation amount map. This swirl control valve operation amount map defines the relation between a necessary amount of swirl (swirl velocity) and an operation amount of the swirl control valve 66 for achieving the necessary amount of swirl. The operation amount of the swirl control valve 66 can be obtained by obtaining an amount of swirl necessary for matching the "actual representative swirl velocity" to the "target representative swirl velocity", and applying the obtained amount of swirl to the swirl control valve operation amount map.

The swirl velocity control as described above is continuously performed during operation of the engine 1.

As described above, in the present embodiment, the "actual representative swirl velocity" is obtained by specifying the "injection time representative crank angle" and the "spray representative position", and the "actual representative swirl velocity" is matched to the "target representative swirl velocity". Then, the "actual representative swirl velocity" and the "target representative swirl velocity" are obtained as values that correspond to a change in the quantity of combustion state caused by an environmental change, a transition of operation or the like. As a result, even in the case of a rapid change in the operation state of the engine 1, or an environmental change, deterioration of exhaust emissions can be prevented, and favorable exhaust emissions can be maintained.


Second embodiment


Next, a second embodiment will now be described. As described above, the present embodiment performs control of the fuel injection interval (specifically, a no fuel injection period from the end point of time of the pilot injection to the start point of time of the main injection), after the "representative swirl velocity" at the specified "injection time representative crank angle" and in the specified "spray representative position" is determined.

As a general description, in this fuel injection interval control, first, the "injection time representative crank angle", which is a timing for obtaining the "representative swirl velocity", is specified according to the operation state (engine load and engine speed) of the engine 1, and at the same time, the "spray representative position", which is a specified position in the spray for obtaining the "representative swirl velocity", is specified. Then, the "representative swirl velocity" at the specified "injection time representative crank angle" and in the specified "spray representative position" is calculated.

Then, an overlap degree (overlap angle) when a main injection is executed is calculated between a spray in the main injection and a spray in a pilot injection performed prior to the main injection is calculated, and an equivalence ratio (hereinafter referred to as an "in-spray equivalence ratio") in the spray in the main injection that includes the overlapping portion is calculated. Then, this "in-spray equivalence ratio" is compared with a preset "target equivalence ratio", and the injection interval is controlled such that the "in-spray equivalence ratio" matches the "target equivalence ratio". That is, the overlap angle between a spray in the pilot injection and a spray in the main injection is changed by controlling the injection interval, thereby adjusting the "in-spray equivalence ratio".

The injection interval control of the present embodiment will be specifically described below. FIG. 14 is a flowchart showing the procedure of the injection interval control. The flowchart is repeatedly executed every predetermined period of time (for example, several milliseconds), after the engine 1 starts operation.

The operations in steps ST1 to ST3 in the flowchart shown in FIG. 14 are performed in the same manner as those in steps ST1 to ST3 in the flowchart (FIG. 7) of the first embodiment described above, and therefore the description thereof is omitted here.

Note that since specifying of the "injection time representative crank angle" in step ST1, specifying of the "spray representative position" in step ST 2 and calculation of the "representative swirl velocity" in step ST 3 are performed also in the present embodiment, it is possible to obtain a swirl velocity, which is employed in a below-described equation (Equation (6)) for calculating an overlap angle between the pilot injection and the main injection, as an appropriate velocity corresponding to the engine load or the like. That is, it becomes possible to secure ignitability of the air-fuel mixture and reduce the amount of HC generated in the case where the engine speed is low and also the fuel injection amount is small (at the time of low-load operation), or to reduce the amount of smoke generated in the case where the engine speed is high and also the fuel injection amount is large (at the time of high-load operation).

After the "representative swirl velocity" is calculated in step ST3, in step ST10, the overlap angle between a spray in the main injection and a spray in the pilot injection is calculated.

FIG. 15 depicts schematic plan views showing a state of some of the sprays (sprays injected from two nozzles) in the cylinder when the pilot injection and the main injection are performed. FIG. 15(a) schematically shows the state of sprays at the end of the pilot injection, and FIG. 15(b) schematically shows the state of sprays at the end of the main injection. Also, in FIG. 15(b), the sprays of fuel injected in the main injection are indicated by the solid lines, and the sprays of fuel injected in the pilot injection executed immediately preceding the main injection (pilot sprays that have been moved due to a swirl flow) are indicated by the broken lines.

As shown in FIG. 15 (b), a spray of fuel injected in the pilot injection is moved in the circumferential direction due to a swirl flow, so that part of the spray overlaps a spray that is injected in the main injection performed thereafter (spray injected in the main injection from a nozzle located on the downstream side of the swirl flow). The overlap angle ($\theta_{overlap}$ in FIG. 15 (b)) of the sprays (a spray in the pilot injection and a spray in the main injection) changes depending on the injection interval, which is a no fuel injection period from the end point of time of the pilot injection to the start point of time of the main injection. That is, with respect to the injection interval that achieves the overlap angle $\theta_{overlap}$ shown in FIG. 15 (b), the overlap angle $\theta_{overlap}$ gradually increases as the injection interval is increased, and in contrast, the overlap angle $\theta_{overlap}$ gradually decreases as the injection interval is decreased.

A method for calculating the overlap angle $\theta_{overlap}$ between sprays will now be described below. The angle of movement of a spray during a period from the execution of the pilot injection to the execution of the main injection is calculated by Equation (5) indicated below. Also, the overlap angle $\theta_{overlap}$ between the pilot injection and the main injection is calculated by Equation (6) indicated below. "$\theta$" in Equation (6) corresponds to a spray angle.

[Expression 4]

$$\text{Angle of movement of spray} = \text{Swirl velocity } (\omega/s) \times \text{Time} \quad \cdots \quad (5)$$

$$\theta_{overlap} = \text{Swirl velocity } (\omega/s) \times \text{Time} - (2\pi/\text{the number of nozzles} - \theta) \quad \cdots \quad (6)$$

After the overlap angle $\theta_{overlap}$ between sprays is calculated in this manner, the procedure moves to step ST11, where an "in-spray equivalence ratio $\varphi_{total}$" is calculated.

The "in-spray equivalence ratio $\varphi_{total}$" is calculated by Equation (7) indicated below. "$\varphi_{sp}$" in Equation (7) corresponds to an equivalence ratio obtained with respect to fuel injected in the main injection, and "$V_{sp}$" corresponds to a volume of the air-fuel mixture generated by the fuel injected in the main injection. Also, "$\varphi_{overlap}$" corresponds to an equivalence ratio in an overlap region between sprays, and a "volume $V_{overlap}$" corresponds to the volume of the overlap region between sprays. That is, the denomination of Equation (7) corresponds to a spray volume in the main injection (this volume includes the overlap region with a spray in the pilot injection as its part), and the numerator indicates the amount of fuel present in the spray volume (this amount partially includes the amount of fuel injected in the pilot injection). Note that Equation (8) is an equation for calculating the equivalence ratio $\varphi_{overlap}$ in the overlap region between sprays, and Equation (9) is for calculating the volume $V_{overlap}$ in the overlap region between sprays.

[Expression 5]

$$\varphi_{total} = \frac{\varphi_{sp} \cdot V_{sp} + \varphi_{overlap} \cdot V_{overlap}}{V_{sp}} \quad \cdots (7)$$

$$\varphi_{overlap} = 2 \cdot \varphi_{sp} \quad \cdots (8)$$

$$V_{overlap} = 1/3 \cdot \pi \cdot \left( L_{sp} \cdot \tan(\frac{\theta_{overlap}}{2}) \right)^2 \cdot L_{sp} \quad \cdots (9)$$

After the "in-spray equivalence ratio $\varphi_{total}$" is calculated in this manner, the procedure moves to step ST12, where the "in-spray equivalence ratio" is compared with a preset "target equivalence ratio". The "target equivalence ratio" is set such that amount of smoke generated and the amount of HC generated are both within the ranges required by regulations at the time of combustion in the combustion chamber 3.

FIG. 16 is a map for setting the "target equivalence ratio" (a target equivalence ratio map), which is created in advance through experimentation, simulation, or the like, and stored in the ROM 102. The "target equivalence ratio" is obtained by applying the current engine speed and the current fuel injection amount (the amount of fuel injected in the main injection into the cylinder that has reached the combustion stroke) to the target equivalence ratio map. The lower the engine speed is or the smaller the fuel injection amount is, the lower the set "target equivalence ratio" is, and the higher the engine speed is or larger the fuel injection amount is, the higher the set "target equivalence ratio" is.

If the determination result in step ST12 is "NO" because the "in-spray equivalence ratio" does not match the "target equivalence ratio", the procedure moves to step ST13, where the injection interval is corrected based on the deviation (disparity between the in-spray equivalence ratio and the target equivalence ratio), and the pilot injection and the main injection are executed at the corrected injection interval. That is, in the state shown in FIG. 15 (b), the larger the deviation is, the larger the set correction amount of the injection interval is. Specifically, in the case where the "in-spray equivalence ratio" is lower than the "target equivalence ratio", the larger the deviation therebetween is, the longer the set injection interval is, and thereby the spray overlap angle is increased. In this manner, the amount of HC generated is suppressed. In contrast, in the case where the "in-spray equivalence ratio" is higher than the "target equivalence ratio", the larger the deviation therebetween is, the shorter the set injection interval is, and thereby the spray overlap angle is reduced. In this manner, the amount of smoke generated is suppressed.

FIG. 17 is a diagram showing the relation between the injection interval and the amount of smoke generated at the time of high-load operation of the engine 1. For example, in the case of the injection interval "Ia" in FIG. 17, in which the amount of smoke generated is relatively large since the "in-spray equivalence ratio" is higher than the "target equivalence ratio", the injection interval is changed to "Ib" in FIG. 17 (the injection interval is reduced), for example. In this manner, the spray overlap angle is reduced such that the "in-spray equivalence ratio" matches the "target equivalence ratio", thereby reducing the amount of smoke generated. Also in the case where the injection interval is changed to "Ic" in FIG. 17 (the injection interval is increased), the amount of smoke generated can be reduced. In this case, a main injection is executed after a pilot spray that has been moved due to a swirl flow has passed in front of a nozzle located on the downstream side of the swirl flow, and a region in the spray injected in the pilot injection that is on the upstream side in the swirl flow direction overlaps the spray injected in the main injection.

Also, FIG. 18 shows the relation between the injection interval and the amount of HC generated at the time of low-load operation of the engine 1. For example, in the case of the injection interval "Id" in FIG. 18, in which the amount of HC generated is relatively large since the "in-spray equivalence ratio" is lower than the "target equivalence ratio", the injection interval is changed to "Ie" in FIG. 18 (the injection interval is increased), for example. In this manner, the spray overlap angle is increased such that the "in-spray equivalence ratio" matches the "target equivalence ratio", thereby reducing the amount of HC generated. Also in the case where the injection interval is changed to "If" in FIG. 18 (the injection interval is further increased), the amount of HC generated can be reduced. In this case, the pilot spray that has been moved due to a swirl flow passes in front of a nozzle located on the downstream side of the swirl flow (the nozzle adjacent to the nozzle from which the pilot spray has been injected on the downstream side), and overlaps the spray injected in the main injection from a nozzle located on the further downstream side of the swirl flow.

Note that in FIG. 17 and FIG. 18, the amount of smoke generated or the amount of HC generated changes periodically because, by changing the injection interval, the spray that overlaps a spray injected in the main injection from a certain nozzle may be the spray injected in the pilot injection from a nozzle which is the first nozzle from the certain nozzle on the upstream side in the swirl flow direction, or may be the spray injected in the pilot injection from a nozzle which is the second nozzle from the certain nozzle on the upstream side in the swirl flow direction, among the nozzles located in on the upstream side in the swirl flow direction relative to the certain nozzle.

By the injection interval control as described above, the "in-spray equivalence ratio" can be matched to the "target equivalence ratio", and even in the case where the quantity of combustion state has changed due to an environmental change or a transition of the operation, an appropriate "in-spray equivalence ratio" can be obtained, and thus even in the case of a rapid change in the operation state of the engine 1, deterioration of exhaust emissions can be prevented, and favorable exhaust emissions can be maintained.

Also, in the present embodiment, it is possible to improve responsiveness of the control for obtaining an appropriate equivalence ratio, and also adjust the equivalence ratio with high precision. Particularly, in conventional examples, the feedback control is performed on the equivalence ratio based on the output from a PM sensor or the like. In such a case, the amount in the pilot injection or the main injection is increased in order to prevent an misfire at a low temperature in a state in which an appropriate overlap angle between sprays has not been obtained, and therefore there has been a concern about deterioration of specific fuel consumption, or deterioration of exhaust emissions. In the present embodiment, since an appropriate overlap angle between sprays can be obtained, the injection amount can be increased by a minimum necessary amount, and thus the specific fuel consumption and exhaust emissions can be improved.

Variation of second embodiment

Next, a variation of the second embodiment will now be described. In this variation as well, the fuel injection interval (a no fuel injection period from the end point of time of the pilot injection to the start point of time of the main injection) is controlled after the "representative swirl velocity" at the specified "injection time representative crank angle" and in the specified "spray representative position" is determined.

FIG. 19 is a flowchart showing the procedure of the injection interval control of this variation. The flowchart is repeatedly executed every predetermined period of time (for example, several milliseconds) after the engine 1 is started.

The operations in the steps ST1 to ST3 and ST10 to ST 13 shown in the flowchart of FIG. 19 are performed in the same manner as those in the steps ST1 to ST3 and ST10 to ST 13 shown in the flowchart (FIG. 14) of the above-described second embodiment, and therefore the description thereof is omitted here.

After the "in-spray equivalence ratio" is calculated in the above-described step ST11, the procedure moves to step ST20, where the spray overlap angle calculated in step ST10 is compared with a preset upper limit for the spray overlap angle. This spray overlap angle upper limit corresponds to an acceptable limit set for controlling the amount of smoke generated to be within the ranges required by regulations at the time of combustion in the combustion chamber 3. Also, in the case where the spray overlap angle upper limit is changed according to the operation state of the engine 1, a spray overlap angle upper limit map (not shown in the drawings) for obtaining the spray overlap angle upper limit according to the engine speed and the fuel injection amount is stored in advance in the ROM 102, and the spray overlap angle upper limit is obtained from the spray overlap angle upper limit map.

In the case where the spray overlap angle is less than the spray overlap angle upper limit, and the determination result in step ST20 is "YES", the procedure moves to step ST12 for performing the above-described operation for comparing the "in-spray equivalence ratio" with the "target equivalence ratio". In contrast, in the case where the spray overlap angle is more than or equal to the spray overlap angle upper limit, and the determination result in step ST20 is "NO", the procedure moves to step ST21, where the injection interval is increased by a predetermined amount, and the procedure returns to step ST10. That is, the spray overlap angle is reduced by increasing the injection interval, and after which the procedure returns to step ST10. Note that the spray overlap angle may be reduced by reducing the injection interval.

By repeating the operation described above, while suppressing the amount of smoke generated to be within the ranges required by regulations by setting the spray overlap angle to an angle less than the spray overlap angle upper limit, the "in-spray equivalence ratio" is matched to the "target equivalence ratio", and it is thus possible to obtain an appropriate "in-spray equivalence ratio" even in the case where the quantity of combustion state has changed due to an environmental change or a transition of operation, for example.

- Other embodiments -

In the embodiments described above, a case was described in which the present invention is applied to an in-line four-cylinder diesel engine mounted in an automobile. The present invention is not limited to use in an automobile, and is applicable also to engines used in other applications. Also, there is no particular limitation with respect to the number of cylinders or the engine type (classified as an in-line engine, V engine, horizontally opposed engine, and so forth).

In place of, or in addition to, adjustment of the opening degree of the swirl control valve 66 in the swirl velocity control of the first embodiment, a valve opening time of the intake valve 16 may be adjusted by a variable valve timing (VVT) mechanism (variable swirl velocity mechanism). That is, in the case where the "actual representative swirl velocity" is lower than the "target representative swirl velocity", the greater the deviation therebetween, the greater the valve opening time of the intake valve 16 is delayed so as to set the intake flow velocity to be high.

Also in the second embodiment and the variation thereof, similar to the first embodiment, the "actual representative swirl velocity" is calculated by performing temperature correction on the "representative swirl velocity", and the overlap angle $\theta_{overlap}$ between the pilot injection and the main injection may be calculated based on the "actual representative swirl velocity" (by Equation (6) indicated above).

Also, the correction parameter used for correcting the "representative swirl velocity" to calculate the "actual representative swirl velocity" is not limited to the temperature, and other correction parameters may be used. For example, the "actual representative swirl velocity" may be calculated by performing correction according to the pressure, gas (air) amount, oxygen concentration or the like in a cylinder. These quantities of state in the cylinder are estimated based on sensing values of various sensors. Also, the quantity of state in the cylinder may be estimated based on the operation state of the engine 1.

Furthermore, in the second embodiment and the variation thereof, the spray overlap angle between the pilot injection and the main injection is adjusted by controlling the injection interval. The present invention is not limited to this, and can be applied also to adjustment of the spray overlap angle between main injections by controlling the injection interval in the case where the main injection is executed a plurality of times (split main injection), or to adjustment of the spray overlap angle between a main injection and an after-injection by controlling the injection interval.

In the embodiments described above, although a description was provided of an engine to which the piezo injector 23, which attains a full valve opening state only when a current is applied thereto and thus changes a fuel injection rate, is applied, the present invention is applicable also to engines to which a variable injection rate injector is applied.

Also, in the embodiments described above, the maniverter 77 is provided with the NSR catalyst 75 and the DPNR catalyst 76, but a maniverter provided with the NSR catalyst 75 and a diesel particulate filter (DPF) may be used as well.

[Industrial Applicability]

The present invention can be applied to the control for expanding the scope of usage of swirl flow in a common rail in-cylinder direct injection multi-cylinder diesel engine mounted in an automobile.

<div align="center">[Reference Signs List]</div>

| 1 | Engine (internal combustion engine) |
|---|---|
| 15a | Intake port |
| 3 | Combustion chamber |
| 23 | Injector (fuel injection valve) |
| 66 | Swirl control valve (variable swirl velocity mechanism) |

**Claims**

1.  A control apparatus of a compression self-ignition internal combustion engine that injects fuel from a fuel injection valve into a cylinder in which a swirl flow is generated, and performs combustion by the fuel undergoing self-ignition, the control apparatus comprising:

    representative timing specifying means that specifies a timing for calculating a swirl velocity according to an operation state of the internal combustion engine;
    representative position specifying means that specifies a position in a cylinder for calculating the swirl velocity according to an operation state of the internal combustion engine;
    swirl velocity calculating means that calculates a swirl velocity at the specified representative timing and in the specified representative position; and
    control parameter adjusting means that adjusts an internal combustion engine control parameter based on the swirl velocity calculated by the swirl velocity calculating means.

2.  The control apparatus of an internal combustion engine according to claim 1,
    wherein a variable swirl velocity mechanism capable of varying the swirl velocity is provided, and
    the control parameter adjusting means is configured to control the variable swirl velocity mechanism such that the swirl velocity calculated by the swirl velocity calculating means matches a preset target swirl velocity.

3.  The control apparatus of an internal combustion engine according to claim 2,
    wherein the variable swirl velocity mechanism is a swirl control valve in an intake system or a variable valve timing mechanism for an intake valve.

4.  The control apparatus of an internal combustion engine according to claim 1,
    wherein the control parameter adjusting means is configured to control an injection interval of fuel that is injected in a plurality of stages at intervals such that an equivalence ratio in an overlap region between sprays of fuel injected from the fuel injection valve in a plurality of stages at intervals matches a preset target equivalence ratio.

5.  The control apparatus of an internal combustion engine according to claim 1,
    wherein the representative timing specifying means is configured to specify the timing for calculating the swirl velocity to be further toward an angle of delay side in a period of fuel injection from the fuel injection valve, the higher a load of the internal combustion engine is.

6.  The control apparatus of an internal combustion engine according to claim 1,
    wherein the representative position specifying means is configured to specify the position in the cylinder for calculating the swirl velocity to be further toward a central position in a longitudinal direction of a spray, the central position being separated from a tip in a length direction of the spray, the higher a load of the internal combustion engine is.

7.  The control apparatus of an internal combustion engine according to claim 1,
    wherein the swirl velocity calculating means is configured to calculate the swirl velocity by performing a correction operation according to a quantity of a state in a cylinder on a representative swirl velocity at the specified representative timing and in the specified representative position.

8. The control apparatus of an internal combustion engine according to claim 2,
wherein the target swirl velocity is obtained by performing a correction operation according to a quantity of a state in a cylinder on a reference target swirl velocity obtained according to an operation state of the internal combustion engine.

9. The control apparatus of an internal combustion engine according to claim 7 or 8,
wherein the quantity of a state in a cylinder is at least one of a temperature, a pressure, a gas amount, and an oxygen concentration in the cylinder.

10. The control apparatus of an internal combustion engine according to claim 4,
wherein the target equivalence ratio is obtained according to an operation state of the internal combustion engine.

FIG.1

EP 2 615 285 A1

EP 2 615 285 A1

FIG.2

22

FIG.3

100 : ECU

105

40 — Crank Position Sensor
41 — Rail Pressure Sensor
42 — Throttle Position Sensor
43 — Airflow Meter
44 — A/F Sensor
45 — Exhaust Temperature Sensor
46 — Water Temperature Sensor
47 — Accelerator Opening Degree Sensor
48 — Intake Pressure Sensor
49 — Intake Temperature Sensor
21 — Supply Pump
23 — Injector
26 — Fuel Addition Valve
62 — Throttle Valve
66 — Swirl Control Valve
81 — EGR Valve

Input Interface

Output Interface

Backup RAM — 104

RAM — 103

ROM — 102

CPU — 101

107

106

23

FIG.4

EP 2 615 285 A1

FIG.5

FIG.6

FIG.7

```
        ┌─────────────────────────────┐
        │    Swirl velocity control    │
        └─────────────────────────────┘
                       │
                       ▼
   ┌────────────────────────────────────────────┐   ST1
   │ Specify injection time representative crank angle │
   └────────────────────────────────────────────┘
                       │
                       ▼
      ┌──────────────────────────────────────┐   ST2
      │   Specify spray representative position   │
      └──────────────────────────────────────┘
                       │
                       ▼
      ┌──────────────────────────────────────┐   ST3
      │   Calculate representative swirl velocity  │
      └──────────────────────────────────────┘
                       │
                       ▼
   ┌────────────────────────────────────────────┐   ST4
   │   Correct representative swirl velocity and    │
   │  calculate actual representative swirl velocity │
   └────────────────────────────────────────────┘
                       │
                       ▼
       ╱────────────────────────────────────╲   ST5
YES  ╱  Target representative swirl velocity = Actual ╲
◄────    representative swirl velocity?
      ╲────────────────────────────────────╱
                       │ NO
                       ▼
   ┌────────────────────────────────────────────┐   ST6
   │ Determine swirl velocity control operation amount │
   └────────────────────────────────────────────┘
                       │
                       ▼
      ┌──────────────────────────────────────┐   ST7
      │      Swirl control valve control       │
      └──────────────────────────────────────┘
                       │
                       ▼
                 ┌──────────┐
                 │  RETURN  │
                 └──────────┘
```

## FIG.8

Late period of injection(ainjm + $\tau$ )

C

Injection time representative crank angle

B

Early period of injection(ainjm)

0

Fuel injection amount

Engine speed

## FIG.9

Spray center

E

Spray representative position

D

Spray tip

0

Fuel injection amount

Engine speed

FIG.10

Swirl ratio

TDC · Crank·angle

FIG.11

A2

A1

Temperature

FIG.12

FIG.13

## FIG.14

```
        ┌─────────────────────────────┐
        │   Injection interval control │
        └─────────────────────────────┘
                      │
                      ▼
   ┌──────────────────────────────────────────┐
   │ Specify injection time representative      │──── ST1
   │ crank angle                                │
   └──────────────────────────────────────────┘
                      │
                      ▼
      ┌──────────────────────────────────────┐
      │ Specify spray representative position  │──── ST2
      └──────────────────────────────────────┘
                      │
                      ▼
      ┌──────────────────────────────────────┐
      │ Calculate representative swirl velocity│──── ST3
      └──────────────────────────────────────┘
                      │
                      ▼
        ┌──────────────────────────────────┐
        │ Calculate spray overlap angle      │──── ST10
        └──────────────────────────────────┘
                      │
                      ▼
      ┌──────────────────────────────────────┐
      │ Calculate in-spray equivalence ratio   │──── ST11
      └──────────────────────────────────────┘
                      │
                      ▼
  YES  ╱────────────────────────────────────────────╲
 ◄─────  Target equivalence ratio = In-spray          ──── ST12
 │      ╲ equivalence ratio?                          ╱
 │        ────────────────────────────────────────────
 │                    │ NO
 │                    ▼
 │        ┌──────────────────────────────────┐
 │        │ Injection interval control         │──── ST13
 │        └──────────────────────────────────┘
 │                    │
 └───────────────────►│
                      ▼
              ┌─────────────┐
              │   RETURN     │
              └─────────────┘
```

# FIG.15

(a)

Pilot injection

Swirl flow

Pilot injection

(b)

Pilot injection that has been
moved by swirl flow

Main injection

Swirl flow

Pilot injection that has been
moved by swirl flow

Main injection

$\theta$ overlap

FIG.16

FIG.17

High-load operation

FIG.18

Low-load operation

## FIG.19

Injection interval control

Specify injection time representative crank angle — ST1

Specify spray representative position — ST2

Calculate representative swirl velocity — ST3

(A)

Calculate spray overlap angle — ST10

Calculate in-spray equivalence ratio — ST11

Spray overlap angle < Spray overlap angle upper limit? — ST20

NO → ST21

Increase injection interval

(A)

YES

Target equivalence ratio = In-spray equivalence ratio? — ST12

YES

NO

Injection interval control — ST13

RETURN

<table>
<tr><td colspan="2" align="center">**INTERNATIONAL SEARCH REPORT**</td><td colspan="2">International application No.<br>PCT/JP2010/065443</td></tr>
</table>

**A. CLASSIFICATION OF SUBJECT MATTER**
*F02D41/40*(2006.01)i, *F02B31/02*(2006.01)i

According to International Patent Classification (IPC) or to both national classification and IPC

**B. FIELDS SEARCHED**

Minimum documentation searched (classification system followed by classification symbols)
F02D41/40, F02B31/02

Documentation searched other than minimum documentation to the extent that such documents are included in the fields searched
Jitsuyo Shinan Koho          1922-1996     Jitsuyo Shinan Toroku Koho     1996-2010
Kokai Jitsuyo Shinan Koho    1971-2010     Toroku Jitsuyo Shinan Koho     1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-2177 A  (Toyota Motor Corp.),<br>08 January 2009 (08.01.2009),<br>paragraphs [0004] to [0014]<br>(Family: none) | 1-10 |
| A | JP 2005-240645 A  (Toyota Motor Corp.),<br>08 September 2005 (08.09.2005),<br>paragraphs [0009] to [0027]<br>& EP 1568876 A2 | 1-10 |
| A | JP 10-26049 A  (Nissan Motor Co., Ltd.),<br>27 January 1998 (27.01.1998),<br>paragraphs [0003] to [0021]<br>& US 6012431 A          & US 6167342 A<br>& US 6298299 B1        & GB 2313927 A<br>& GB 2329040 A          & GB 2313927 A<br>& DE 19723210 A1 | 1-10 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 October, 2010 (06.10.10) | 19 October, 2010 (19.10.10) |

| Name and mailing address of the ISA/<br>Japanese Patent Office | Authorized officer |
|---|---|
| Facsimile No. | Telephone No. |

Form PCT/ISA/210 (second sheet) (July 2009)

**EP 2 615 285 A1**

**INTERNATIONAL SEARCH REPORT**

| International application No. |
|---|
| PCT/JP2010/065443 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2-5710 A (Mazda Motor Corp.),<br>10 January 1990 (10.01.1990),<br>page 1, lower left column, line 4 to page 2,<br>lower right column, line 1<br>(Family: none) | 1-10 |
| A | JP 1-216015 A (Mazda Motor Corp.),<br>30 August 1989 (30.08.1989),<br>page 1, lower left column, line 4 to page 2,<br>lower right column, line 2<br>(Family: none) | 1-10 |

Form PCT/ISA/210 (continuation of second sheet) (July 2009)

37

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007177783 A

- JP 2004360572 A